(19) Europäisches Patentamt
European Patent Office
Office européen des brevets

(11) **EP 4 317 054 A1**

(12) **EUROPEAN PATENT APPLICATION**
published in accordance with Art. 153(4) EPC

(43) Date of publication:
**07.02.2024 Bulletin 2024/06**

(21) Application number: **22775858.8**

(22) Date of filing: **25.03.2022**

(51) International Patent Classification (IPC):
$C01B\ 3/02$ (2006.01)          $B01J\ 37/08$ (2006.01)
$C04B\ 35/50$ (2006.01)          $B01J\ 23/83$ (2006.01)
$B01J\ 23/843$ (2006.01)          $B01J\ 23/847$ (2006.01)
$B01J\ 23/889$ (2006.01)          $C25B\ 11/052$ (2021.01)
$C25B\ 11/077$ (2021.01)          $C25B\ 9/00$ (2021.01)
$C25B\ 1/04$ (2021.01)

(52) Cooperative Patent Classification (CPC):
**B01J 23/83; B01J 23/843; B01J 23/847;
B01J 23/889; B01J 37/08; C01B 3/02; C04B 35/50;
C25B 1/04; C25B 9/00; C25B 11/052;
C25B 11/077; Y02E 60/36**

(86) International application number:
**PCT/JP2022/014663**

(87) International publication number:
**WO 2022/203077 (29.09.2022 Gazette 2022/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 25.03.2021   JP 2021052313
21.05.2021   JP 2021086488
29.09.2021   JP 2021160053

(71) Applicant: **Asahi Kasei Kabushiki Kaisha
Tokyo 1000006 (JP)**

(72) Inventors:
• **NIIRO, Hideaki
Tokyo 100-0006 (JP)**
• **FUJII, Yuichi
Tokyo 100-0006 (JP)**

(74) Representative: **dompatent von Kreisler Selting
Werner -
Partnerschaft von Patent- und Rechtsanwälten
mbB
Deichmannhaus am Dom
Bahnhofsvorplatz 1
50667 Köln (DE)**

(54) **ELECTRODE, METHOD FOR PREPARING ELECTRODE, ANODE FOR WATER ELECTROLYSIS, ELECTROLYTIC CELL, AND METHOD FOR PRODUCING HYDROGEN**

(57)      An electrode including $LaNi_xM_yO_{3-z}$ on a substrate, and having an initial double layer capacitance of more than $0.6\ F/cm^2$, where $x + y$ is 0.8 or more and 1.2 or less, y is 0.001 or more and 0.6 or less, z is -0.5 or more and 0.5 or less, and M includes at least one of Nb, Ta, Sb, Ti, Mn, or Zr.

EP 4 317 054 A1

**Description**

TECHNICAL FIELD

The present disclosure relates to an electrode, a method for preparing the electrode, an anode for water electrolysis, an electrolytic cell using the anode for water electrolysis, and a method for producing hydrogen using the anode for water electrolysis.

BACKGROUND

In recent years, hydrogen produced using renewable energy has been attracting attention as a clean energy source for solving problems such as global warming caused by $CO_2$ and the depletion of fossil fuel reserves. In hydrogen production using renewable energy, there is a need for low costs comparable to that of conventional hydrogen production by reforming fossil fuel. Therefore, hydrogen production using renewable energy requires a high level of energy efficiency and inexpensive equipment that cannot be achieved with conventional technology.

One method for producing hydrogen able to meet the above requirements is electrolytic decomposition of water (water electrolysis). For example, a number of plans have been proposed to produce, store, and transport hydrogen from water electrolysis using electricity generated from natural energy sources such as wind, solar power, and the like.

In water electrolysis, oxygen is generated at an anode and hydrogen at a cathode when an electric current is applied to water. A major source of energy loss in electrolysis is overvoltage at the anode and the cathode. By reducing this overvoltage, hydrogen may be produced more efficiently. In particular, overvoltage of the anode is higher than that of the cathode, and research and development to reduce overvoltage of the anode is being widely advanced.

Among oxides having a perovskite structure, materials having a high oxygen evolution capacity are known and have attracted attention as anode materials for water electrolysis (Non-Patent Literature (NPL) 1). To use an oxide having a perovskite structure as an anode for alkaline water electrolysis, an oxide layer is formed on a surface of an electrically conductive substrate. For example, Patent Literature (PTL) 1 describes producing an anode for water electrolysis having a low overvoltage for oxygen evolution (oxygen overvoltage) and high durability by forming a layer of metal oxide having high perovskite oxide content in crystal components on a surface of a porous nickel substrate. PTL 1 also describes a water electrolysis apparatus using the anode.

CITATION LIST

Patent Literature

PTL 1: WO 2018/155503 A

Non-Patent Literature

NPL 1: Science, 2011, 334, 1383

SUMMARY

(Technical Problem)

However, the anode described in PTL 1 was found to have a problem in that the oxygen overvoltage is not sufficiently low after long-term energization.

It would be helpful to provide an electrode that exhibits low oxygen overvoltage even after long-term energization, a method for preparing the electrode, an anode for water electrolysis, an electrolytic cell using the anode for water electrolysis, and a method for producing hydrogen using the anode for water electrolysis.

(Solution to Problem)

The inventors have intensively studied and experimented in order to solve the problems described above. As a result, the inventors have found that an electrode including $LaNi_xM_yO_{3-z}$ on a substrate and having an initial double layer capacitance in a specific range has a low oxygen overvoltage even after long-term energization.

The present disclosure is as follows.

[1] An electrode comprising $LaNi_xM_yO_{3-z}$ on a substrate, and having an initial double layer capacitance of more than

0.6 F/cm$^2$, where x + y is 0.8 or more and 1.2 or less, y is 0.001 or more and 0.6 or less, z is -0.5 or more and 0.5 or less, and M includes at least one of Nb, Ta, Sb, Ti, Mn, and Zr.

[2] The electrode according to [1], wherein the number of moles of La per cm$^2$ is 0.06 mmol or more and 1.1 mmol or less.

[3] The electrode according to [1] or [2], wherein the capacitance per mmol of La is 10 F or more and 25 F or less.

[4] The electrode according to any one of [1] to [3], wherein the coating weight of the $LaNi_xM_yO_{3-z}$ is more than 145 g/m$^2$ and 3,500 g/m$^2$ or less.

[5] The electrode according to any one of [1] to [4], wherein the main peak position 2θ of XRD of the $LaNi_xM_yO_{3-z}$ is 32.6° or more and 33.2° or less.

[6] The electrode according to any one of [1] to [5], wherein y in the $LaNi_xM_yO_{3-z}$ is 0.002 or more and less than 0.2.

[7] The electrode according to any one of [1] to [6], wherein the main peak position 2θ of XRD of the $LaNi_xM_yO_{3-z}$ is 32.7° or more and 33.2° or less.

[8] The electrode according to any one of [1] to [7], wherein M in the $LaNi_xM_yO_{3-z}$ is Nb.

[9] The electrode according to any one of [1] to [8], wherein, in a square region of the $LaNi_xM_yO_{3-z}$ layer having 20 μm sides, a sum of areas of pores having an area of more than 0.785 μm$^2$ and 20 μm$^2$ or less is 10 μm$^2$ or more and 200 μm$^2$ or less.

[10] The electrode according to any one of [1] to [9], wherein, in a square region of the $LaNi_xM_yO_{3-z}$ layer having 20 μm sides, the average pore area is more than 0.785 μm$^2$ and 10 μm$^2$ or less.

[11] The electrode according to any one of [1] to [10], wherein, in a square region of the $LaNi_xM_yO_{3-z}$ layer having 20 μm sides, the average number of pores is 20 or more and 150 or less.

[12] An electrolytic cell comprising the electrode according to any one of [1] to [11] as an anode.

[13] A method for producing hydrogen, comprising inputting a variable electrical power source to the electrolytic cell according to [12].

[14] A method for producing hydrogen comprising: water electrolysis of water containing an alkali by an electrolyzer; and producing hydrogen, the electrolyzer comprising at least an anode and a cathode, the anode comprising $LaNi_xM_yO_{3-z}$ on a substrate, and having an initial double layer capacitance of more than 0.6 F/cm$^2$, where x + y is 0.8 or more and 1.2 or less, y is 0.001 or more and 0.6 or less, z is -0.5 or more and 0.5 or less, and M includes at least one of Nb, Ta, Sb, Ti, Mn, and Zr.

[15] A method for preparing the electrode according to any one of claims 1 to 11, comprising a process of baking a mixture of $La(NO_3)_3$, $Ni(NO_3)_2$, and a compound comprising C, H, N, and O having a carboxyl group and an amino group, wherein a molar ratio of combustion byproduct gases $CO_2$, $H_2O$, and $N_2$ generated by the baking to the $LaNi_xM_yO_{3-z}$ (combustion byproduct gases/$LaNi_xM_yO_{3-z}$) is 5 or more and less than 12.6.

[16] A method for preparing the electrode according to any one of [1] to [11], comprising a process of baking a mixture of $La(NO_3)_3$, $Ni(NO_3)_2$, and glycine, wherein a glycine/$NO_3^-$ molar ratio in the mixture is 0.1 or more and 0.3 or less.

(Advantageous Effect)

According to the present disclosure, an electrode that exhibits low oxygen overvoltage even after long-term energization, an anode for water electrolysis, and a water electrolytic cell including the anode for water electrolysis are obtainable.

BRIEF DESCRIPTION OF THE DRAWINGS

In the accompanying drawings:

FIG. 1 is a side view illustrating an example of an electrolyzer including an electrolytic cell including an electrode according to an embodiment as an anode;

FIG. 2 illustrates a cross-sectional view of an interior portion of an electrolytic cell indicated by the dot-dash rectangular frame in FIG. 1 in an example of an electrolyzer including an electrolytic cell including an electrode according to an embodiment as an anode;

FIG. 3 illustrates an overview of an electrolysis apparatus used for Examples and Comparative Examples;

FIG. 4 illustrates an overview of a bipolar electrolyzer used in electrolysis testing;

FIG. 5 illustrates an equivalent circuit fitting model used to calculate double layer capacitance;

FIG. 6 is a cross-sectional photograph of an electrode and an example of setting a square region having 20 μm sides to be cropped;

FIG. 7 is an example of an image of the square region having 20 μm sides cropped from FIG. 6; and

FIG. 8 is an example of a binarized extraction image of pores from FIG. 7.

DETAILED DESCRIPTION

The following is a detailed description of an embodiment of the present disclosure (hereinafter also referred to as the "present embodiment"). The present embodiment is an illustrative example for the purpose of explanation and is not intended to be limiting. Further, various modifications may be made without departing from the spirit of the present disclosure.

(Electrode)

According to the present embodiment, a first feature is that the electrode includes, at least, a substrate.

The substrate is preferably electrically conductive. Electrically conductive substrates include, for example, nickel, nickel-based material, titanium, glassy carbon (GC), tantalum, zirconium, gold, platinum, palladium, and the like. Nickel-based material includes nickel-based alloys such as Monel®, Inconel®, and Hastelloy® (Monel, Inconel, and Hastelloy are registered trademarks in Japan, other countries, or both).

From the viewpoint of heat resistance to the baking process during electrode preparation, the material of the substrate is preferably metal. In addition, a nickel or nickel-based material is more preferable in view of durability, electrical conductivity, and economy, as these are metals that do not dissolve at oxygen evolution potentials in alkaline aqueous solutions and are less expensive than precious metals.

The shape of the electrically conductive substrate of the electrode may be a flat plate, or a plate-like porous body having a large number of pores. Specific examples shapes of porous bodies include expanded metal, perforated metal, plain weave mesh, foamed metal, and similar shapes. Among these, expanded metal is preferred, and dimensions are not particularly limited. In order to achieve both an increase in gas generation due to increased electrolytic surface area and efficient removal of gases generated by electrolysis from the electrode surface, and in view of mechanical strength, a distance between centers of the mesh across the short way (SW) is preferably 2 mm or more and 5 mm or less, a distance between centers of the mesh across the long way (LW) is preferably 3 mm or more and 10 mm or less, the thickness is preferably 0.2 mm or more and 2 mm or less, and the open fraction is preferably 20 % or more and 80 % or less. More preferably, the SW is 3 mm or more and 4 mm or less, the LW is 4 mm or more and 6 mm or less, the thickness is 0.8 mm or more and 1.5 mm or less, and the open fraction is 40 % or more and 60 % or less.

According to the present embodiment, a second feature is that the electrode includes $LaNi_xM_yO_{3-z}$, where $x + y$ is 0.8 or more and 1.2 or less, y is 0.001 or more and 0.6 or less, z is -0.5 or more and 0.5 or less, and M includes at least one of Nb, Ta, Sb, Ti, Mn, and Zr. $LaNi_xM_yO_{3-z}$ may be stacked directly on the substrate to form a $LaNi_xM_yO_{3-z}$ layer. An interface may be formed between the substrate and the $LaNi_xM_yO_{3-z}$ layer. Two or more of Nb, Ta, Sb, Ti, Mn, and Zr may be included as M.

According to the present embodiment, as a perovskite structure metal oxide, high oxygen evolution capacity may be achieved by Ni placement at at least a portion of the B sites. Further, the placement of M (M including at least one of Nb, Ta, Sb, Ti, Mn, or Zr) at the B sites along with Ni is preferred in order to provide low oxygen overvoltage even after long-term energization and durability to alkalis at high temperatures. In particular, the placement of Nb at the B sites along with Ni is preferred in order to provide low overvoltage for oxygen evolution when an electrolyte having a high alkali concentration is used. As M, the elements Nb, Ta, Sb, Ti, and Zr are preferred from the viewpoint that a small amount of M is able to provide durability to alkalis at high temperatures. Nb is most preferred from the viewpoint that an even smaller amount of Nb is able to achieve both durability to alkalis at high temperatures and overvoltage.

From the viewpoint of providing low overvoltage for oxygen evolution even after long-term energization, alkali resistance at high temperatures, and a low oxygen overvoltage when an electrolyte having high alkali concentration is used, $x + y$ is 0.8 or more and 1.2 or less. Preferably, $x + y$ is 0.8 or more and 1.1 or less, and in view of both alkali resistance at high temperatures and overvoltage, more preferably 0.8 or more and 1.05 or less, even more preferably 0.9 or more and 1.05 or less, and most preferably 1.0 or more and 1.05 or less.

From the viewpoint of alkali resistance at high temperatures, y is 0.001 or more and 0.6 or less. From the viewpoint of both alkali resistance at high temperatures and overvoltage, y is preferably 0.002 or more and less than 0.2, preferably 0.005 or more and 0.15 or less, and even more preferably 0.01 or more and 0.1 or less.

The value z is -0.5 or more and 0.5 or less. According to the present disclosure, z is obtained from the composition ratio 3-z of O, calculated to match the valence balance of the composition formula, where La is trivalent, Ni is trivalent, and as M, Nb is pentavalent, Ta is pentavalent, Sb is pentavalent, Ti is tetravalent, Mn is trivalent, Zr is tetravalent, and O has a valency of -2. For example, in the composition formula $LaNi_xM_yO_{3-z}$, when x = 0.8 and y = 0.2, then from the formula $3-z = (3 + 3 \times 0.8 + 5 \times 0.2)/2$, z = -0.2 is obtained.

Whether $LaNi_xM_yO_{3-z}$ (where $x + y$ is 0.8 or more and 1.2 or less, y is 0.001 or more and 0.6 or less, z is -0.5 or more and 0.5 or less, and M includes at least one of Nb, Ta, Sb, Ti, Mn, and Zr) is on the substrate may be confirmed by a publicly available method. For example, the $LaNi_xM_yO_{3-z}$ layer on the substrate is stripped off and dissolved in acid such as aqua regia, and the composition analyzed by inductively coupled plasma atomic emission spectrometry (ICP-

AES), or the $LaNi_xM_yO_{3-z}$ layer on the substrate is stripped off and the composition analyzed using an X-ray fluorescence spectrometer, or an electrode cross-section of the $LaNi_xM_yO_{3-z}$ layer is analyzed using scanning electron microscopy with energy dispersive X-ray spectroscopy (SEM-EDX).

According to the present embodiment, a third feature is that the initial double layer capacitance is more than $0.6$ F/cm$^2$.

According to the present disclosure, double layer capacitance refers to double layer capacitance calculated by analysis according to equivalent circuit fitting after use of a three-electrode electrochemical cell using a Luggin capillary, performing AC impedance measurements, and obtaining a Cole-Cole plot of the real and imaginary parts.

A specific method of double layer capacitance calculation is described below with reference to an Example. According to the present embodiment, the area (cm$^2$) used in the double layer capacitance calculation is the geometric area of the electrode. For example, when an electrode having expanded metal as the substrate is cut out to be a square 2 cm in length and 2 cm in width when viewed from the thickness direction, the area is 2 cm $\times$ 2 cm = 4 cm$^2$.

The inventors found that an electrode including $LaNi_xM_yO_{3-z}$ (where x + y is 0.8 or more and 1.2 or less, y is 0.001 or more and 0.6 or less, z is -0.5 or more and 0.5 or less, and M includes at least one of Nb, Ta, Sb, Ti, Mn, or Zr) on a substrate that has an initial double layer capacitance of more than 0.6 F/cm$^2$ surprisingly has a low oxygen overvoltage even after long-term energization. The reason for this is not clear, but it may be that the addition of element M increases the chemical stability of the electrode, and the large double layer capacitance keeps the current density on the surface area basis of the $LaNi_xM_yO_{3-z}$ catalyst low, which reduces the stress on the catalyst surface during long-term energization, resulting in a smaller oxygen overvoltage after long-term energization.

From the viewpoint of providing low oxygen overvoltage even after long-term energization, the initial double layer capacitance is more than 0.6 F/cm$^2$, preferably 1.0 F/cm$^2$ or more, more preferably 1.5 F/cm$^2$ or more, more preferably 1.9 F/cm$^2$ or more, and most preferably 2.5 F/cm$^2$ or more. When the initial double layer capacitance is more than 0.6 F/cm$^2$, the oxygen overvoltage is low even after long-term energization.

The initial double layer capacitance is preferably 7.0 F/cm$^2$ or less, more preferably 6.8 F/cm$^2$ or less, even more preferably 6.4 F/cm$^2$ or less, even more preferably 6.3 F/cm$^2$ or less, and most preferably 6.0 F/cm$^2$ or less. When the initial double layer capacitance is 7.0 F/cm$^2$ or less, the double layer capacitance increases as the coating weight of catalyst is increased, and the oxygen overvoltage tends to be small even after long-term energization.

In the electrode according to the present disclosure, the number of moles of La per cm$^2$ is preferably 0.06 mmol or more and 1.1 mmol or less, more preferably 0.13 mmol or more and 0.91 mmol or less, and more preferably 0.15 mmol or more and 0.68 mmol or less. When the number of moles of La per cm$^2$ is in a range described above, achieving an initial double layer capacitance of more than 0.6F/cm$^2$ is facilitated.

The number of moles of La per cm$^2$ is obtained by dissolving the $LaNi_xM_yO_{3-z}$ catalyst on an electrode of defined area in acid, measuring the concentration of La in the solution by ICP-AES, calculating the mass of La included on the electrode, dividing the mass by the atomic weight of La (138.9), and then dividing by the area of the electrode. The area (cm$^2$) used in the calculation is the geometric area of the electrode. For example, when an electrode having expanded metal as the substrate is cut out to be a square 2 cm in length and 2 cm in width when viewed from the thickness direction, the area is 4 cm$^2$. A specific calculation method is explained with reference to an Example.

In the electrode according to the present embodiment, the capacitance per mmol of La is preferably 10 F or more and 25 F or less, more preferably 12 F or more and 23 F or less, and even more preferably 14 F or more and 21 F or less. When the capacitance per mmol of La is in a range described above, a low oxygen overvoltage tends to be achieved with a small amount of catalyst. When the capacitance per mmol of La is 10 F or more, the oxygen overvoltage per coating amount of catalyst tends to be low, and when the capacitance per mmol of La is 25 F or less, the oxygen overvoltage tends to be low even after long-term energization, without any decrease in double layer capacitance.

The capacitance per mmol of La is obtained by dividing the double layer capacitance by the number of moles (mmol) of La per cm$^2$.

According to the present embodiment, the coating weight of $LaNi_xM_yO_{3-z}$ on the substrate is preferably more than 145 g/m$^2$ and 3,500 g/m$^2$ or less, more preferably 200 g/m$^2$ or more and 3,000 g/m$^2$ or less, and more preferably 350 g/m$^2$ or more and 2,500 g/m$^2$ or less. When the coating weight of $LaNi_xM_yO_{3-z}$ is more than 145 g/m$^2$, the oxygen overvoltage after long-term energization tends to be smaller. When the coating weight of $LaNi_xM_yO_{3-z}$ is 3,500 g/m$^2$ or less, the double layer capacitance increases as the amount of catalyst coating is increased, and the oxygen overvoltage tends to be smaller even after long-term energization. The area (m$^2$) used in the coating weight calculation is the geometric area of the electrode. For example, for an electrode using expanded metal as the substrate, when the substrate is cut to be a square 10 cm (0.1 m) long and 10 cm (0.1 m) wide when viewed from the thickness direction, the area will be 0.01 m$^2$, and when 1 g of $LaNi_xM_yO_{3-z}$ is coated on the substrate, the coating weight is 100 g/m$^2$.

The coating weight of $LaNi_xM_yO_{3-z}$ catalyst may be determined by stripping off the $LaNi_xM_yO_{3-z}$ catalyst from a fixed area of the electrode, removing metal powder such as Ni derived from the substrate and the like using a magnet, obtaining powder of the $LaNi_xM_yO_{3-z}$ catalyst that was coated, and calculating mass by weighing with an electronic balance and dividing by the value of the fixed area of the electrode.

The LaNi$_x$M$_y$O$_{3-z}$ catalyst may be stripped from the electrode by various methods able to strip without contamination of foreign matter that cannot be removed by a magnet. For example, methods using a file such as a precision file or ultra-fine file, a spatula such as a micro spatula or spatula, a brush such as a wire brush, and the like.

According to the present embodiment, the XRD main peak position 2θ of LaNi$_x$M$_y$O$_{3-z}$ is preferably 32.6° or more and 33.2° or less.

According to the present embodiment, the XRD main peak position of LaNi$_x$M$_y$O$_{3-z}$ shifts depending on the electrode, but when using the Kα1 line of Cu as the X-ray source and measuring the XRD (X-ray diffraction) of the electrode, using the main peak position 2θ = 33.166° of the (104) plane of LaNiO$_3$ of the Powder Diffraction File (PDF$^®$ (PDF is a registered trademark in Japan, other countries, or both)) 01-070-5757 as a reference, the peak around 2θ = 32.5° to 33.2° is the main peak position of LaNi$_x$M$_y$O$_{3-z}$.

The main peak position of LaNi$_x$M$_y$O$_{3-z}$ is calculated after shift-correcting the XRD spectrum of the main peak position 2θ of NiO around 2θ = 43.276° using an "X-axis offset" tool to match the PDF 00-047-1049 data, where 2θ = 43.276° for the (200) plane of NiO.

The XRD main peak position 2θ of LaNi$_x$M$_y$O$_{3-z}$ is preferably 32.6° or more and 33.2° or less from the viewpoint of alkali resistance at high temperatures.

The inventors found that LaNi$_x$M$_y$O$_{3-z}$ prepared by controlling the XRD main peak position 2θ to be 32.6° or more and 33.2° or less, in which a defined amount of Ni is replaced with element M or a defined amount of element M is added to LaNiO$_3$, surprisingly tends to exhibit high durability to alkalis at high temperatures. The reason for this is not clear, but it may be that the concentration of oxygen defects, which are reaction sites between LaNi$_x$M$_y$O$_{3-z}$ and alkalis at high temperatures, is reduced by setting the XRD main peak position 2θ of LaNi$_x$M$_y$O$_{3-z}$ to 32.6° or more and 33.2° or less, and the addition of element M suppresses the formation of oxygen defects in LaNi$_x$M$_y$O$_{3-z}$ in alkalis at high temperatures.

From the viewpoint of superior durability to alkalis at high temperatures, 32.7° or more and 33.2° or less is more preferable, and in view of both durability to alkalis at high temperatures and overvoltage, 32.75° or more and 33.2° or less is even more preferable, and 32.8° or more and 33.2° or less is most preferable.

According to the present embodiment, the XRD main peak full width at half maximum of LaNi$_x$M$_y$O$_{3-z}$ is preferably 0.6° or more and 0.85° or less, in view of durability to alkalis at high temperatures. The main peak full width at half maximum refers to the full width at half maximum calculated with the peak in the range of 2θ from 31° or more to 35° or less.

The XRD main peak full width at half maximum of LaNi$_x$M$_y$O$_{3-z}$ is more preferably 0.6° or more and 0.8° or less, and in view of both durability to alkalis at high temperatures and overvoltage, more preferably 0.6° or more and 0.75° or less.

According to the present embodiment, the XRD main peak intensity of LaNi$_x$M$_y$O$_{3-z}$ is preferably 6,000 or more and 100,000 or less, in view of durability to alkalis at high temperatures. The main peak intensity refers to the intensity obtained by subtracting the baseline intensity from the measured intensity (Counts) at the peak position of the main peak measured using the XRD measurement apparatus D8 ADVANCE (sold by Bruker Corporation). The measurement conditions are described later with reference to an Example.

The XRD main peak intensity of LaNi$_x$M$_y$O$_{3-z}$ is more preferably 6,500 or more and 50,000 or less, even more preferably 7,000 or more and 20,000 or less, and in view of both durability to alkalis at high temperatures and overvoltage, most preferably 7,000 or more and 17,000 or less.

According to the present embodiment, in a square region of the LaNi$_x$M$_y$O$_{3-z}$ layer having 20 μm sides, the sum of the areas of pores each having an area of more than 0.785 μm$^2$ and 20 μm$^2$ or less is preferably 10 μm$^2$ or more and 200 μm$^2$ or less.

When the pores are circular, the area of a circular pore having a diameter of 1 μm is $0.5 \times 0.5 \times \pi \approx 0.785$ (μm$^2$). The area of a circular pore having a diameter of 5 μm is $2.5 \times 2.5 \times \pi \approx 20$ (μm$^2$). The sum of the areas of pores having an area of more than 0.785 μm$^2$ and less than 20 μm$^2$ being in the range of 10 μm$^2$ or more and 200 μm$^2$ or less indicates that when the pores are circular, pores having a diameter of more than 1 μm and 5 μm or less are present in a defined area range in a catalyst layer cross section.

According to the present embodiment, the sum of the areas of the pores having an area of more than 0.785 μm$^2$ and 20 μm$^2$ or less is calculated by first embedding a small piece of electrode in epoxy resin and preparing a cross-section observation sample by cutting and polishing. From a backscattered electron image observed by electron microscope at 500× magnification, an image from which pores are to be binarized and extracted using image processing software is cropped by setting a square region having 20 μm sides. Subsequently, image processing is performed on the cropped image to binarize and extract the pores, the area of each pore is determined, and finally the sum of the areas of the pores having an area of more than 0.785 μm$^2$ and 20 μm$^2$ or less among the pore areas is calculated. The square region having 20 μm sides from which the pores are binarized and extracted from the cross section photograph is preferably set so that the region does not include any outer surface or cracks leading to the outer surface. When processing an image, appropriate filtering is preferably performed to remove noise. A specific method of image processing is described below with reference to an Example.

The inventors found that for an electrode including $LaNi_xM_yO_{3-z}$ (where x + y is 0.8 or more and 1.2 or less, y is 0.001 or more and 0.6 or less, z is -0.5 or more and 0.5 or less, and M includes at least one of Nb, Ta, Sb, Ti, Mn, or Zr) on a substrate, where, in a square region in the $LaNi_xM_yO_{3-z}$ layer having 20 $\mu$m sides, the sum of the areas of the pores having an area of more than 0.785 $\mu m^2$ and 20 $\mu m^2$ or less is 10 $\mu m^2$ or more and 200 $\mu m^2$ or less, such an electrode surprisingly tends to exhibit a low overvoltage when an electrolyte having a high alkali concentration is used. The reason for this is not clear, but it may be that when the sum of the areas of the pores having an area of more than 0.785 $\mu$m$^2$ and 20 $\mu m^2$ or less is in the range of 10 $\mu m^2$ or more and 200 $\mu m^2$ or less, then even when an electrolyte having a high alkali concentration is used, a decrease in diffusion rate in the electrode caused by the viscosity of the electrolyte is suppressed, and the electrode has sufficient stability against the electrolyte having a high alkali concentration.

From the viewpoint of providing a lower overvoltage for oxygen evolution even when an electrolyte having a high alkali concentration is used, the sum of the areas of the pores having an area of more than 0.785 $\mu$m$^2$ and 20 $\mu m^2$ or less is more preferably 20 $\mu m^2$ or more and 160 $\mu m^2$ or less, and even more preferably 30 $\mu m^2$ or more and 130 $\mu m^2$ or less.

According to the present embodiment, the average pore area in the square region of the $LaNi_xM_yO_{3-z}$ layer having 20 $\mu$m sides is preferably more than 0.785 $\mu m^2$ and 10 $\mu m^2$ or less from the viewpoint of providing a low overvoltage for oxygen evolution when an electrolyte having a high alkali concentration is used.

The average pore area is the number average of the area of each pore obtained by binarized extraction of pores according to image processing using image processing software on a cropped image. A specific calculation method is described later with reference to an Example.

The average pore area of the $LaNi_xM_yO_{3-z}$ layer, from the viewpoint of providing a lower overvoltage for oxygen evolution when an electrolyte having a higher alkali concentration is used, is more preferably 1.2 $\mu m^2$ or more and 6.8 $\mu m^2$ or less, and even more preferably 3.2 $\mu m^2$ or more and 4.5 $\mu m^2$ or less.

According to the present embodiment, the average number of pores in the square region of the $LaNi_xM_yO_{3-z}$ layer having 20 $\mu$m sides is preferably 20 or more and 150 or less, from the viewpoint of providing a low overvoltage for oxygen evolution when an electrolyte having a high alkali concentration is used.

A specific method of calculating the average number of pores is described below with reference to an Example.

From the viewpoint of providing a lower overvoltage for oxygen evolution when an electrolyte having a high alkali concentration is used, the average number of pores is more preferably 22 or more and 140 or less, even more preferably 29 or more and 140 or less, and most preferably 29 or more and 51 or less.

According to the present embodiment, the porosity in the square region of the $LaNi_xM_yO_{3-z}$ layer having 20 $\mu$m sides is preferably more than 29 % and 55 % or less, from the viewpoint of providing a low overvoltage for oxygen evolution when an electrolyte having a high alkali concentration is used.

A specific method of calculating porosity is described below with reference to an Example.

The porosity is more preferably 41 % or more and 55 % or less, even more preferably 42 % or more and 55 % or less, and most preferably 45 % or more and 55 % or less.

The electrode according to the present embodiment may be used in practical applications as an anode for water electrolysis, and makes it possible to provide an electrolytic cell for water electrolysis using the electrode according to the present embodiment as an anode and a method of producing hydrogen using the anode for water electrolysis. Water containing an alkali may be used for water electrolysis.

(Method of electrode preparation)

The electrode according to the present embodiment may be prepared by applying an aqueous solution (coating solution) containing metal salts of La, Ni, and M (where M includes at least one of Nb, Ta, Sb, Ti, Mn, or Zr) onto a substrate, drying, and prebaking to form a defined mass of $LaNi_xM_yO_{3-z}$ precursor on the substrate, followed by main baking.

As metal salts, water-soluble salts such as nitrate, oxynitrate, chloride, oxalate, tartrate, acetate, sulfate, and the like may be used. Metal salts may be anhydrous salts or hydrated salts.

For La, Ni, and M, water-dispersible sols of oxides or hydroxides may be used instead of metal salts.

When Nb is used as M, niobium oxalate or ammonium niobium oxalate is preferred for solubility. When Sb is used as M, antimony tartrate is preferred.

The addition of an organic ligand such as an amino acid such as glycine, a carboxylic acid such as oxalic acid and tartaric acid, and the like to the coating solution is preferred from the following viewpoints: the viewpoint of facilitating the preparation of $LaNi_xM_yO_{3-z}$ exhibiting a low oxygen overvoltage; the viewpoint of facilitating the preparation of $LaNi_xM_yO_{3-z}$ having high durability to alkalis at high temperatures; and the viewpoint of facilitating the preparation of $LaNi_xM_yO_{3-z}$ exhibiting lower oxygen evolution overvoltage even when an electrolyte having a high alkali concentration is used.

In particular, glycine is a preferred organic ligand, as use of a coating solution in which glycine and a metal nitrate are dissolved facilitates: preparation of an electrode that exhibits lower oxygen overvoltage; preparation of an electrode that achieves both durability to alkalis at high temperatures and overvoltage; and preparation of an electrode that exhibits lower overvoltage for oxygen evolution when an electrolyte having a high alkali concentration is used.

In the preparation of the electrode according to the present embodiment, processing including baking of a mixture of $La(NO_3)_3$, $Ni(NO_3)_2$, and glycine, where the glycine/$NO_3^-$ molar ratio is 0.1 or more and 0.3 or less, is preferred, as this facilitates preparation of an electrode having an initial double layer capacitance of more than 0.6 $F/cm^2$. The process of baking a mixture of $La(NO_3)_3$, $Ni(NO_3)_2$, and glycine, in which the glycine/$NO_3^-$ molar ratio is 0.1 or more and 0.3 or less, is performed by applying an aqueous solution of $La(NO_3)_3 \cdot 6H_2O$, $Ni(NO_3)_2 \cdot 6H_2O$, and glycine to a substrate in such a way that the molar ratio of glycine to $NO_3^-$ is 0.1 or more and 0.3 or less, drying, then baking. When the glycine/$NO_3^-$ molar ratio is less than 0.1, subcrystals consisting of La and Ni other than the perovskite crystal phase may be obtained, which may lead to the oxygen overvoltage not being low. The glycine/$NO_3^-$ molar ratio being 0.3 or less is preferred as this tends to reduce the number of applications to prepare an electrode having an initial double layer capacitance of more than 0.6 $F/cm^2$.

In preparation of the electrode according to the present embodiment, from the viewpoint of increasing the capacitance per mmol of La, the glycine/$NO_3^-$ molar ratio is more preferably 0.1 or more and 0.25 or less in the process of baking a mixture of $La(NO_3)_3$, $Ni(NO_3)_2$, and glycine.

In the preparation of the electrode according to the present embodiment, from the viewpoint of reducing the amount of gas generation due to glycine decomposition during baking and enabling the preparation of an electrode having an initial double layer capacitance of more than 0.6 $F/cm^2$ with an even smaller number of applications, the glycine/$NO_3^-$ molar ratio is even more preferably 0.1 or more and 0.2 or less in the process of baking a mixture of $La(NO_3)_3$, $Ni(NO_3)_2$, and glycine.

In the preparation of the electrode according to the present embodiment, when including a process of baking a mixture of $La(NO_3)_3$, $Ni(NO_3)_2$, and a compound having C, H, N, and O as constituent elements having a carboxyl group and an amino group represented by an amino acid such as glycine and aspartic acid, a dipeptide such as carnosine, and a polypeptide such as polylysine, the molar ratio of combustion byproduct gases ($CO_2$, $H_2O$, and $N_2$) generated in the baking to $LaNi_xM_yO_{3-z}$ (combustion byproduct gases/$LaNi_xM_yO_{3-z}$) is preferably 5 or more and less than 12.6. When the combustion byproduct gases/$LaNi_xM_yO_{3-z}$ molar ratio is 5 or more, when the aqueous solution of the mixture is applied, dried, and baked as a coating solution, the coating on the electrode is unlikely to dissolve or drop off, and the coating weight of the electrode through repeated application, drying, and baking tends to be easy to increase. When the combustion byproduct gases/$LaNi_xM_yO_{3-z}$ molar ratio is less than 12.6, when the aqueous solution of the mixture is applied, dried, and baked as a coating solution, the weight of coating on the electrode in a single application, drying, and baking cycle may be increased, and this tends to facilitate preparation of an electrode having a high coating weight by fewer cycles of application, drying, and baking.

A specific method of calculation of the combustion byproduct gases/$LaNi_xM_yO_{3-z}$ molar ratio is described below with reference to an Example.

The amount of combustion byproduct gases ($CO_2$, $H_2O$, and $N_2$) generated may be measured by subjecting a product obtained by thoroughly drying the coating solution at 100 °C to an organic elemental analyzer such as Flash 2000 manufactured by Thermo Fisher Scientific Inc. The amount of $LaNi_xM_yO_{3-z}$ generated may be calculated from the mass of powder generated by baking the product obtained by thoroughly drying the coating solution at 100 °C under defined baking conditions. Therefore, calculating the combustion byproduct gases/$LaNi_xM_yO_{3-z}$ molar ratio is possible from the amount of combustion byproduct gases ($CO_2$, $H_2O$, and $N_2$) generated and the amount of $LaNi_xM_yO_{3-z}$ produced, as determined by the measurement.

The concentration of the aqueous solution containing the metal salts of La, Ni, and M is preferably 0.1 mol/kg solvent or more and 4.0 mol/kg solvent or less, in terms of mass molar concentration based on $LaNi_xM_yO_{3-z}$. At 0.1 mol/kg solvent or more, preparation of an electrode having a defined coating weight with a small number of application and baking cycles becomes possible, which is preferable from a productivity standpoint. At 4.0 mol/kg solvent or less, dissolution of metal salts and organic ligands becomes easier, which is preferable in view of coating solution productivity. 0.2 mol/kg solvent or more and 2.0 mol/kg solvent or less is more preferable, 0.3 mol/kg solvent or more and 2.0 mol/kg solvent or less is even more preferable, 0.35 mol/kg solvent or more and 2.0 mol/kg solvent or less is even more preferable, and 0.4 mol/kg solvent or more and 1.0 mol/kg solvent or less is even more preferable.

Further, in particular, when M in $LaNi_xM_yO_{3-z}$ is Nb, the concentration of the aqueous solution containing the metal salts of La, Ni, and Nb is preferably 0.3 mol/kg solvent or more and 4.0 mol/kg solvent or less, in terms of weight molar concentration based on $LaNi_xM_yO_{3-z}$. At 0.3 mol/kg solvent or more, making the sum of the areas of pores having an area of more than 0.785 $\mu m^2$ and 20 $\mu m^2$ or less 10 $\mu m^2$ or more and 200 $\mu m^2$ or less becomes easier. At 4.0 mol/kg solvent or less, dissolution of metal salts and organic ligands becomes easier, which is preferable in view of coating solution productivity. 0.35 mol/kg solvent or more and 2.0 mol/kg solvent or less is more preferable, and 0.4 mol/kg solvent or more and 1.0 mol/kg solvent or less is even more preferable.

The temperature at which the coating solution is applied to the substrate and then dried is preferably 50 °C or more and 200 °C or less. When the temperature is 50 °C or more, drying may be completed in 3 minutes or more to 1 hour or less, which is preferable in view of productivity. When the temperature is 200 °C or less, the cooling time of the substrate after drying is shorter, which is preferable in view of productivity.

A spray coating method is a preferred method of applying the coating solution to the substrate. In particular, when the coating solution nebulized by a spray nozzle is dried to a high viscosity before landing on the substrate, the coating solution film does not migrate on the substrate after landing, and a uniform film thickness may be formed on the substrate, facilitating preparation of an electrode that exhibits low oxygen overvoltage even after long-term energization.

Further, a dip coating method, in which the substrate is completely immersed in the coating solution, is also a preferred method of applying the coating solution to the substrate. When application is performed by the dip-coating method, making the sum of the areas of the pores having an area of more than 0.785 $\mu m^2$ and 20 $\mu m^2$ or less to be 10 $\mu m^2$ or more and 200 $\mu m^2$ or less is facilitated by controlling concentration of the coating solution.

When immersing the substrate in the coating solution, the substrate is preferably inserted slowly and at a tilted angle into the coating solution. This makes complete immersion of the substrate without bubbles adhering possible, and voids in the metal oxide layer (prebaking body layer) formed on the substrate surface may be completely replaced by the coating solution, and therefore the sum of the areas of pores having an area of more than 0.785 $\mu m^2$ and 20 $\mu m^2$ or less may be controlled with good reproducibility.

The temperature at which the substrate is prebaked after drying is preferably 300 °C or more and 500 °C or less. When the temperature is 300 °C or more, the prebaking may be completed in 3 minutes or more to 1 hour or less, which is preferable in view of productivity. When the temperature is 500 °C or less, the cooling time of the substrate after drying is shorter, which is preferable in view of productivity.

Applying, drying, and prebaking may be repeated to prepare electrodes having a desired coating weight of LaNi$_x$M$_y$O$_{3-z}$. When the coating weight per application, drying, and prebaking cycle is 10 g/m$^2$ or more and 50 g/m$^2$ or less, the number of applications is reduced, which is preferable in view of productivity. Further, the coating weight per application, drying, and prebaking cycle is preferably 10 g/m$^2$ or more and 20 g/m$^2$ or less, as this facilitates making the sum of the areas of pores having an area of more than 0.785 $\mu m^2$ and 20 $\mu m^2$ or less be 10 $\mu m^2$ or more and 20 $\mu m^2$ or less.

The temperature of the main baking may be 500 °C or more and 1,000 °C or less, but baking at 650 °C or more is preferable. Baking at 650 °C or more with a baking time of 10 minutes or more to 24 hours or less is preferred in view of productivity as this facilitates preparation of an electrode that exhibits low oxygen overvoltage. Further, baking at 800 °C or more with a baking time of 10 minutes or more to 24 hours or less facilitates controlling the XRD main peak position 2θ of LaNi$_x$M$_y$O$_{3-z}$ to be 32.6° or more and 33.2°, and facilitates preparation of an electrode having high durability to alkalis at high temperatures, and therefore in view of productivity, baking at 800 °C or more is more preferable. Further, baking at 750 °C or more with a baking time of 10 minutes or more to 24 hours or less facilitates preparation of an electrode that exhibits a lower overvoltage for oxygen evolution when an electrolyte having a high alkali concentration is used, and therefore in view of productivity, baking at 750 °C or more is more preferable.

M may be added by advance application of a coating solution containing a water-dispersible sol of the metal salt, oxide, or hydroxide of La or Ni to the electrode, drying, and prebaking, and then applying a coating solution containing a water-dispersible sol of the metal salt, oxide, or hydroxide of M to the electrode by the same method as a top coat, drying, prebaking, and main baking.

Further, M may be added by advance application of a coating solution containing a water-dispersible sol of the metal salt, oxide, or hydroxide of La or Ni to the electrode, drying, prebaking, and main baking, and then applying a coating solution containing a water-dispersible sol of the metal salt, oxide, or hydroxide of M to the electrode by the same method as a top coat, drying, prebaking, and main baking.

(Electrolyzer)

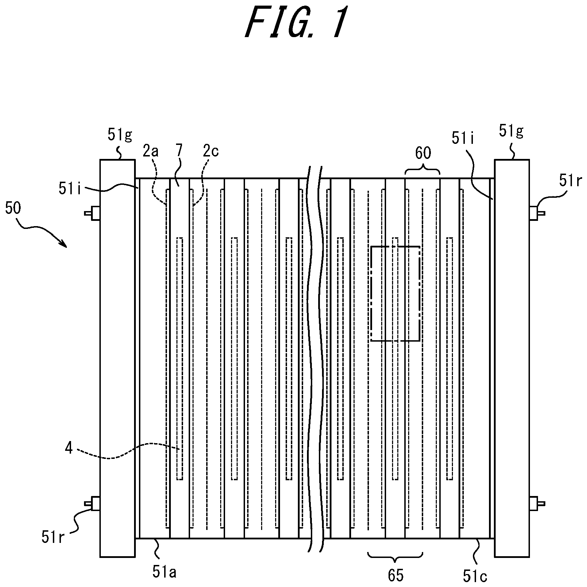

FIG. 1 is a side view illustrating an example of an electrolyzer including an electrolytic cell including the electrode according to the present embodiment as an anode.

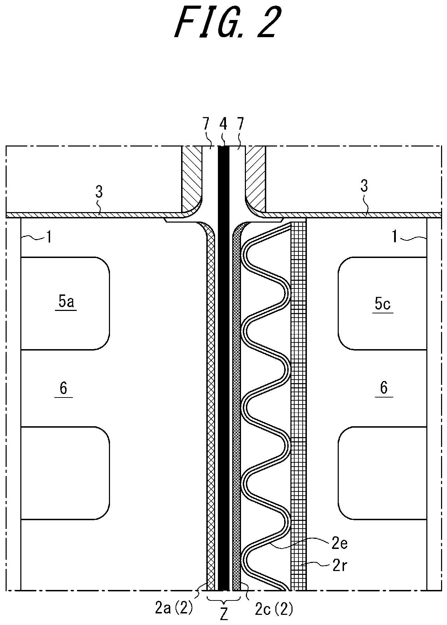

FIG. 2 illustrates a cross-sectional view of a zero-gap structure of an example electrolyzer including an electrolytic cell including the electrode according to the present embodiment as an anode (a cross-sectional view of the interior of the electrolytic cell in the dot-dash rectangular frame indicated in FIG. 1).

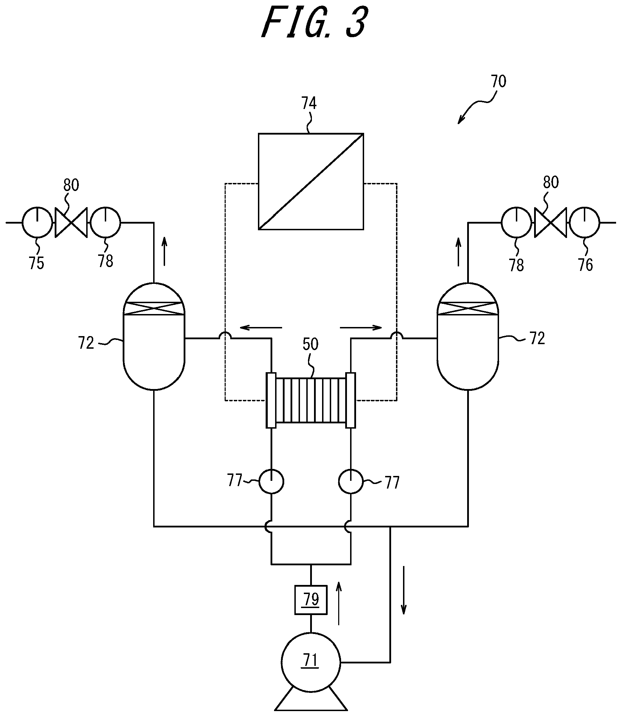

In a bipolar electrolyzer 50 (see FIG. 3) according to the present embodiment, a membrane 4 is in direct contact with an anode 2a and a cathode 2c to form a zero-gap structure Z (see FIG. 2).

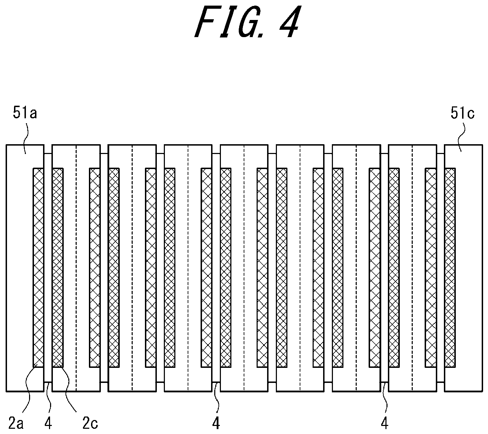

FIG. 3 illustrates an overview of an electrolysis apparatus used in the Examples and Comparative Examples. FIG. 4 illustrates an overview of a bipolar electrolyzer used in electrolysis testing.

(Elements)

As illustrated in FIG. 1, in the bipolar electrolyzer 50, bipolar elements 60 are disposed between an anode terminal element 51a and a cathode terminal element 51c, and a membrane 4 is disposed between the anode terminal element 51a and one of the bipolar elements 60, between each of the bipolar elements 60 adjacent to each other, and between one of the bipolar elements 60 and the cathode terminal element 51c.

According to the present embodiment, in particular, each portion in the bipolar electrolyzer 50 between partition walls 1 of two adjacent bipolar elements 60, and each portion in the bipolar electrolyzer 50 between a terminal element and a partition wall 1 of an adjacent one of the bipolar elements 60, is referred to as an electrolytic cell 65. Each of the electrolytic cells 65 includes the partition wall 1, an anode chamber 5a, and an anode 2a of one element, the membrane 4, and a cathode 2c, a cathode chamber 5c, and the partition wall 1 of another element.

(Electrode chamber)

In the bipolar electrolyzer 50 according to the present embodiment, as illustrated in FIG. 2, an electrode chamber 5 through which the electrolyte passes is defined by the partition walls 1, an outer frame 3, and the membrane 4. Here, sandwiched by the partition walls 1, the electrode chamber 5 on the anode side is the anode chamber 5a and the electrode chamber 5 on the cathode side is the cathode chamber 5c.

According to the present embodiment, where internal headers and external headers may be adopted as an arrangement of headers in a bipolar electrolyzer, space occupied by the anode and the cathode themselves may also be considered to be space inside the electrode chamber. Further, in particular, when a gas-liquid separation box is provided, the space occupied by the gas-liquid separation box may also be considered to be space inside the electrode chamber.

(Rib)

In the bipolar electrolytic cell 65 for alkaline water electrolysis, a rib 6 is preferably physically connected to the electrode 2. According to such a configuration, the rib 6 serves as a support for the electrode 2, making maintaining the zero-gap structure Z easier. Further, the rib 6 is preferably electrically connected to the partition wall 1. Further, the rib 6 may reduce convection currents generated in the electrode chamber 5 due to turbulence in gas-liquid flow in the electrode chamber 5, thereby suppressing local electrolyte temperature increases.

Here, a rib may be provided with an electrode, or a rib may be provided with a current collector, a conductive elastic body, and an electrode in this order.

In the above example of a bipolar electrolytic cell for alkaline water electrolysis, a structure is adopted in which cathode rib - cathode collector - conductive elastic body - cathode are layered in this order in the cathode chamber, and anode rib - anode are layered in this order in the anode chamber.

In the above example of a bipolar electrolytic cell for alkaline water electrolysis, the above "cathode rib - cathode collector - conductive elastic body - cathode" structure is employed in the cathode chamber, and the above "anode rib - anode" structure is employed in the anode chamber, but structure is not limited to these examples, and an "anode rib - anode collector - conductive elastic body - anode" structure may be adopted in the anode chamber.

In detail, the bipolar electrolytic cell for alkaline water electrolysis according to the present embodiment preferably includes ribs 6 (anode ribs and cathode ribs) attached to the partition walls 1, as illustrated in FIG. 2.

The ribs (anode ribs and cathode ribs) are preferably included not only to support the anode or cathode, but also to transmit current from the partition wall to the anode or cathode.

In the bipolar electrolytic cell for alkaline water electrolysis according to the present embodiment, preferably at least part of the ribs are electrically conductive, and more preferably the entirety of the ribs are electrically conductive. According to such a configuration, an increase in cell voltage due to electrode deflection may be suppressed.

Electrically conductive metal is generally used as a material of the ribs. For example, nickel-plated mild steel, stainless steel, nickel, and the like may be used. The material of the ribs is preferably the same material as the partition wall, and nickel in particular is most preferred.

The spacing between adjacent anode ribs or between adjacent cathode ribs is determined taking into account the electrolysis pressure and the pressure difference between the anode chamber and the cathode chamber.

When the spacing between adjacent anode ribs or between adjacent cathode ribs is too narrow, this not only impedes the flow of electrolyte and gases, but also has the disadvantage of increasing cost. A rib pitch of 10 mm or more provides good gas venting to the backside of the electrode. When the rib pitch is too wide, the electrodes (anode and cathode) holding a slight differential pressure between the anode chamber and cathode chamber may deform, and electrical resistance may increase due to the reduced number of anode ribs and cathode ribs, among other disadvantages. A rib pitch of 150 mm or less helps prevent electrode bending. The number of ribs, the length of the ribs, the angle between the ribs and the partition walls, the number of through holes and the spacing (pitch) of the through holes in a given direction along the partition walls may be determined as appropriate as long as the disclosed effects are obtained. The ribs are preferably parallel to a given direction along the partition walls (for example, the direction may be vertical or, when a plan view shape of the partition walls is rectangular, the same direction as that of one of the two sets of opposite sides). The rib pitch of the anode ribs may be the same or different from that of the cathode ribs, and both the rib pitch of the anode ribs and that of the cathode ribs preferably satisfy the range described above.

Laser welding or the like is used to attach the anode ribs and the cathode ribs to the partition walls.

Further, taking cost, ease of fabrication, and strength into consideration, the thickness of the ribs may be 0.5 mm or more and 5 mm or less, and 1 mm or more and 2 mm or less is easy to use, but thickness is not particularly limited.

The electrodes and current collectors are typically attached to the ribs by spot welding, but other methods such as laser welding may be used, and wire or string-like materials may be used to tie them together for close contact. The ribs, as well as the anodes or cathodes, are fixed to the partition walls by spot welding, laser welding, or other means.

(Method for producing hydrogen)

Next, the method for producing hydrogen by alkaline water electrolysis using the bipolar electrolyzer according to the present embodiment is described.

According to the present embodiment, hydrogen is produced at the cathode by applying an electric current to the bipolar electrolyzer in which electrolyte is circulated, including the anode and the cathode as described above, to conduct water electrolysis. A variable power source may be used as a power source, for example. A variable power source is a power source that varies output in units of seconds to minutes from a renewable energy power plant, unlike a power source that outputs stably, such as grid power. Renewable energy power generation methods are not particularly limited, and include, for example, solar power generation and wind power generation.

For example, in the case of electrolysis using a bipolar electrolyzer, in the electrolyte, cationic electrolyte moves from an anode chamber of an element through a membrane to a cathode chamber of an adjacent element, and anionic electrolyte moves from a cathode chamber of an element through a membrane to an anode chamber of an adjacent element. Thus, current during electrolysis flows along the direction in which elements are connected in series. In other words, current flows from an anode chamber of one element to a cathode chamber of an adjacent element through a membrane. Along with electrolysis, oxygen gas is produced in an anode chamber and hydrogen gas is produced in a cathode chamber.

The bipolar electrolytic cell 65 for alkaline water electrolysis according to the present embodiment may be used in the bipolar electrolyzer 50, an electrolysis apparatus 70 for alkaline water electrolysis, and the like. The electrolysis apparatus 70 for alkaline water electrolysis includes, for example, the bipolar electrolyzer 50 according to the present embodiment, a tubing pump 71 for circulating the electrolyte, a gas-liquid separation tank 72 for separating the electrolyte and hydrogen and/or oxygen, and a water replenisher for replenishing the water consumed by the electrolysis.

The electrolysis apparatus for alkaline water electrolysis described above may further include a rectifier 74, an oxygen meter 75, a hydrogen meter 76, a flow meter 77, a pressure gauge 78, a heat exchanger 79, a pressure control valve 80, and the like.

In the alkaline water electrolysis method using the electrolysis apparatus for alkaline water electrolysis described above, the current density applied to the electrolytic cell is preferably 4 kA/m$^2$ to 20 kA/m$^2$, and more preferably 6 kA/m$^2$ to 15 kA/m$^2$.

In particular, when a variable power source is used, the upper limit of current density is preferably in range described above.

With reference to the above drawings, the electrode, the electrolytic cell, and the method for producing hydrogen according to the embodiment of the present disclosure have been illustrated by example. However, the electrode, the electrolytic cell, and the method for producing hydrogen of the present disclosure are not limited to the above examples, and appropriate modifications may be made to the embodiment described above.

EXAMPLES

The present disclosure is more specifically described below with reference to Examples, but is not limited to these Examples, and various modifications are of course possible within the scope of the present disclosure.

(Example A1)

As a porous nickel substrate, a square of nickel expanded metal was prepared having a SW of 3.0 mm, a LW of 4.5 mm, a thickness of 1.2 mm, an open fraction of 54 %, a length of 10 cm, and a width of 10 cm. The nickel expanded metal was subjected to blasting treatment, then acid treatment in 6 N hydrochloric acid at 50 °C for 6 hours, then washed and dried to obtain the substrate for coating.

18.61 g of $Ni(NO_3)_2 \cdot 6H_2O$, 34.64 g of $La(NO_3)_3 \cdot 6H_2O$, and 8.29 g of glycine were dissolved in 200 g of pure water, transferred to a square polyethylene container having a base of 6 cm $\times$ 10 cm and a height of 11 cm, which was used as the liquid A of Example A1.

Ammonium niobium oxalate was dissolved in pure water to prepare 200 g of aqueous solution of ammonium niobium oxalate having a Nb concentration of 80 mmol/kg solution, which was used as the liquid B of Example A1. The concentration of Nb was confirmed by inductively coupled plasma atomic emission spectrometry (ICP-AES).

The liquid A of Example A1 was slowly mixed with the liquid B of Example A1 while stirring with a magnetic stirrer to make the coating solution of Example A1.

While stirring the coating solution, the substrate for coating was turned vertically and the lower half of the substrate was slowly dipped into the coating solution and held for 5 seconds. The substrate was then pulled up, turned upside down, and the top half of the substrate also slowly dipped into the coating solution and held for 5 seconds. After coating the entire surface of the substrate with the coating solution, the substrate was turned sideways and excess coating solution was blown off by an air blowing treatment using an air gun. The substrate was then dried at 60 °C for 10 minutes and further baked at 400 °C for 10 minutes to form a metal oxide layer on the substrate surface.

This cycle of coating, drying, and baking was repeated 60 times. Then, further baking at 750 °C for 1 hour was performed to form a metal oxide layer having a coating weight of 502 g/m² on the substrate for coating, to obtain the electrode of Example A1.

(Example A2)

The substrate for coating was prepared in the same way as in Example A1.

Next, the liquid A and the liquid B, having compositions listed in Table 1 and Table 2, respectively, were prepared. The liquid B was prepared by adding pure water to a $Nb_2O_5$ sol having a primary particle size of 5 nm or less, and the concentration of Nb was confirmed by inductively coupled plasma atomic emission spectrometry (ICP-AES).

Using a spray coating device (rCoater® (rCoater is a registered trademark in Japan, other countries, or both), sold by Asahi Sunac Corporation), the liquid A was applied to both sides of the substrate, dried at 60 °C for 10 minutes, and then baked at 400 °C for 10 minutes to form a metal oxide layer on the substrate surface.

After repeating the cycle of application, drying and baking of the liquid A six times, the liquid B was applied to both sides of the substrate using a spray coating device and then dried at 60 °C for 10 minutes. The increase in mass relative to the substrate prior to the application of the liquid B was calculated to be 77 mg. Further baking at 400 °C for 10 minutes was performed to form a metal oxide layer on the substrate surface.

This cycle of 6 cycles of application of the liquid A, drying, and baking, and 1 cycle of application of the liquid B, drying, and baking, was repeated 5 times, for a total of 30 cycles for the liquid A and 5 cycles for the liquid B.

Further, the electrode was baked at 650 °C for 1 hour to form a metal oxide layer having a coating weight of 488 g/m², to obtain the electrode of Example A2.

The coating weight of metal oxide layer on the substrate was 4.88 g, the mass of 1 mole of $LaNi_{0.85}O_{2.775}$ is 233.1 g, the mass of 1 mole of $NbzOs$ is 265.8 g, and 385 mg of $NbzOs$ was applied, which means that a ratio of 0.15 moles of Nb to 1 mole of $LaNi_{0.85}O_{2.775}$ was applied, resulting in an electrode having a composition of $LaNi_{0.85}Nb_{0.15}O_{3.15}$.

(Example A3)

The substrate for coating was prepared in the same way as in Example A1. Next, the liquid A and the liquid B of Example A3 were prepared, as in Table 1 and Table 2.

In the same way as in Example A2, the liquid A was applied to both sides of the substrate, dried at 60 °C for 10 minutes, and then baked at 400 °C for 10 minutes to form a metal oxide layer on the substrate surface.

After repeating the cycle of application, drying, and baking of the liquid A 25 times, the liquid B was applied to both sides of the substrate and dried at 60 °C for 10 minutes. The increase in mass relative to the substrate before application was calculated to be 14.6 mg. Further baking at 400 °C for 10 minutes was performed to form a metal oxide layer on the substrate surface.

Further, the electrode was baked at 700 °C for 1 hour to form a metal oxide layer having a coating weight of 501 g/m², to obtain the electrode of Example A3.

The coating weight of metal oxide layer on the substrate was 5.01 g, the mass of 1 mole of $LaNi_{0.795}O_{2.6925}$ is 228.6 g, the mass of 1 mole of $NbzOs$ is 265.8 g, and 14.6 mg of $NbzOs$ was applied, which means that a ratio of 0.005 moles of Nb to 1 mole of $LaNi_{0.795}O_{2.6925}$ was applied, resulting in an electrode having a composition of $LaNi_{0.795}Nb_{0.005}O_{2.705}$.

(Example A4)

The substrate for coating was prepared in the same way as in Example A1.

116.3 g of $Ni(NO_3)_2 \cdot 6H_2O$, 173.2 g of $La(NO_3)_3 \cdot 6H_2O$, and 16.52 g of glycine were dissolved in 200 g of pure water to make the liquid A of Example A4.

Ammonium niobium oxalate was dissolved in pure water and 30 % hydrogen peroxide water was added to prepare 200 g of hydrogen peroxide-added ammonium niobium oxalate solution having a Nb concentration of 20 mmol/kg solution and a $H_2O_2$/Nb molar ratio of 2.5, which was used as the liquid B of Example A4. The concentration of Nb was confirmed by inductively coupled plasma atomic emission spectrometry (ICP-AES).

The liquid A was pumped at 0.64 mL/min and the liquid B was pumped at 0.36 mL/min, and the liquid A and the liquid B were mixed just before a spray coating device using a polyether ether ketone (PEEK) T-shaped reactor having an inner diameter of 1 mm (sold by YMC Co., Ltd.) and fed to the spray coating device at a pumping rate of 1 mL/min. Using the spray coating device, the mixture of the liquid A and the liquid B was applied to both sides of the substrate, dried at 60 °C for 10 minutes, and then baked at 400 °C for 10 minutes to form a metal oxide layer on the substrate surface.

After repeating the cycle of coating, drying, and baking of the mixture of the liquid A and the liquid B 13 times, further baking was performed at 700 °C for 1 hour to form a metal oxide layer having a coating weight of 506 $g/m^2$, to obtain the electrode of Example A4.

The density of the liquid A was 1.45 $g/cm^3$ and the density of the liquid B was 1 $g/cm^3$, and the liquid A was mixed at 0.64 mL/min and the liquid B at 0.36 mL/min, and therefore the composition obtained by drying and baking the mixed liquid was found to be $LaNiNb_{0.01}O_{3.025}$.

(Example A5)

The substrate for coating was prepared in the same way as in Example A1. Next, the liquid A and the liquid B of Example A5 were prepared, as in Table 1 and Table 2.

In the same way as in Example A2, the liquid A was applied to both sides of the substrate, dried at 60 °C for 10 minutes, and then baked at 400 °C for 10 minutes to form a metal oxide layer on the substrate surface.

After repeating the cycle of application, drying, and baking of the liquid A 16 times, the liquid B was applied to both sides of the substrate and dried at 60 °C for 10 minutes. The increase in mass relative to the substrate before application was calculated to be 54 mg. Further baking at 400 °C for 10 minutes was performed to form a metal oxide layer on the substrate surface.

Further, the electrode was baked at 700 °C for 1 hour to form a metal oxide layer having a coating weight of 505 $g/m^2$, to obtain the electrode of Example A5.

The coating weight of metal oxide layer on the substrate was 5.05 g, the mass of 1 mole of $LaNiO_3$ is 245.5 g, the mass of 1 mole of NbzOs is 265.8 g, and 54 mg of $Nb_2O_5$ was applied, which means that a ratio of 0.02 moles of Nb to 1 mole of $LaNiO_3$ was applied, resulting in an electrode having a composition of $LaNiNb_{0.02}O_{3.05}$.

(Example A6)

The substrate for coating was prepared in the same way as in Example A1. Next, the liquid A and the liquid B of Example A6 were prepared, as in Table 1 and Table 2.

The liquid A was transferred to a polyethylene container having a base of 13 cm × 13 cm and a height of 10 cm.

The substrate for coating was inserted slowly and at a tilted angle into the liquid A in the container, fully immersed, and held for 5 seconds. The substrate was then pulled up, turned sideways, and excess coating solution was blown off by an air blowing treatment using an air gun. The substrate was then dried at 60 °C for 10 minutes and further baked at 400 °C for 10 minutes to form a metal oxide layer on the substrate surface.

This cycle of coating, drying, and baking was repeated 20 times. When the substrate was inserted into the coating solution in the container, insertion was slow and at a tilted angle in order that voids in the metal oxide layer were replaced by the coating solution.

Next, using a spray coating device, the liquid B was applied to both sides of the substrate and then dried at 60 °C for 10 minutes. The increase in mass relative to the substrate before application was calculated to be 67.7 mg. Further baking at 400 °C for 10 minutes was performed to form a metal oxide layer on the substrate surface. The liquid B was applied, dried, and baked one more time.

Then, further baking at 700 °C for 1 hour was performed to form a metal oxide layer having a coating weight of 514 $g/m^2$ on the substrate for coating, to obtain the electrode of Example A6.

The coating weight of metal oxide layer on the substrate was 5.14 g, the mass of 1 mole of $LaNiO_3$ is 245.5 g, the mass of 1 mole of NbzOs is 265.8 g, and 135 mg of $Nb_2O_5$ was applied, which means that a ratio of 0.05 moles of Nb to 1 mole of $LaNiO_3$ was applied, resulting in an electrode having a composition of $LaNiNb_{0.05}O_{3.125}$.

(Example A7)

The substrate for coating was prepared in the same way as in Example A1. Next, the liquid A of Example A7 was prepared, as in Table 1.

In the same way as in Example A2, the liquid A was applied to both sides of the substrate, dried at 60 °C for 10 minutes, and then baked at 400 °C for 10 minutes to form a metal oxide layer on the substrate surface.

This cycle of application of the liquid A, drying, and baking was repeated four times.

Ammonium niobium oxalate was dissolved in pure water to prepare an aqueous solution of ammonium niobium oxalate having a Nb concentration of 310 mmol/kg solution, which was used as the liquid B in Example A7. The aqueous solution of ammonium niobium oxalate was transferred to a polyethylene container having a base of 13 cm × 13 cm and a height of 10 cm.

The substrate with the metal oxide layer formed on the substrate surface was completely immersed in the liquid B and pulled up. After the entire surface of the substrate was coated with the liquid B, the substrate was turned sideways and a weak air flow applied by an air gun to remove liquid B that was clogging the mesh of the substrate. After the air gun treatment, the mass of the substrate was measured and 1.3 g of the liquid B was found to have been applied to the substrate. The substrate coated with the liquid B was dried at 60 °C for 10 minutes and then baked at 400 °C for 10 minutes.

The process of application, drying, and baking the liquid A four times and the liquid B once was repeated five times, followed by baking at 600 °C for one hour to form a metal oxide layer having a coating weight of 526 g/m$^2$ on the substrate for coating, to obtain the electrode of Example A7.

The coating weight on the substrate was 5.26 g, the mass of 1 mole of $LaNi_{1.1}O_{3.15}$ is 253.8 g and the mass of 1 mole of $Nb_2O_5$ is 265.8 g, and therefore five applications of the aqueous solution of ammonium niobium oxalate having 1.3 g of Nb concentration 310 mmol/kg solution means that a ratio of 0.1 moles of Nb to 1 mole of $LaNi_{1.1}O_{3.15}$ was applied, resulting in an electrode having a composition of $LaNi_{1.1}Nb_{0.1}O_{3.4}$.

(Example A8)

The electrode of Example A8 was obtained by forming a metal oxide layer having a coating weight of 505 g/m$^2$ in the same way as in Example A5, except that instead of baking at 700 °C for 1 hour, baking took place at 750 °C for 1 hour.

(Example A9)

The substrate for coating was prepared in the same way as in Example A1. Next, the liquid A and the liquid B of Example A9 were prepared, as in Table 1 and Table 2.

In the same way as in Example A2, the liquid A was applied to both sides of the substrate, dried at 60 °C for 10 minutes, and then baked at 400 °C for 10 minutes to form a metal oxide layer on the substrate surface.

After repeating the cycle of application, drying, and baking of the liquid A 11 times, the liquid B was applied to both sides of the substrate and dried at 60 °C for 10 minutes. The increase in mass relative to the substrate before application was calculated to be 38 mg. Further baking at 400 °C for 10 minutes was performed to form a metal oxide layer on the substrate surface.

Further, the electrode was baked at 700 °C for 1 hour to form a metal oxide layer having a coating weight of 354 g/m$^2$, to obtain the electrode of Example A9.

The coating weight of metal oxide layer on the substrate was 3.54 g, the mass of 1 mole of $LaNiO_3$ is 245.5 g, the mass of 1 mole of $Nb_2O_5$ is 265.8 g, and 38 mg of $Nb_2O_5$ was applied, which means that a ratio of 0.02 moles of Nb to 1 mole of $LaNiO_3$ was applied, resulting in an electrode having a composition of $LaNiNb_{0.02}O_{3.05}$.

(Example A10)

The substrate for coating was prepared in the same way as in Example A1. Next, the liquid A and the liquid B of Example A10 were prepared, as in Table 1 and Table 2.

In the same way as in Example A2, the liquid A was applied to both sides of the substrate, dried at 60 °C for 10 minutes, and then baked at 400 °C for 10 minutes to form a metal oxide layer on the substrate surface.

After repeating the cycle of application, drying, and baking of the liquid A 13 times, the liquid B was applied to both sides of the substrate and dried at 60 °C for 10 minutes. The increase in mass relative to the substrate before application was calculated to be 43 mg. Further baking at 400 °C for 10 minutes was performed to form a metal oxide layer on the substrate surface.

Further, the electrode was baked at 700 °C for 1 hour to form a metal oxide layer having a coating weight of

404 g/m$^2$, to obtain the electrode of Example A10.

The coating weight of metal oxide layer on the substrate was 4.04 g, the mass of 1 mole of LaNiO$_3$ is 245.5 g, the mass of 1 mole of NbzOs is 265.8 g, and 43 mg of Nb$_2$O$_5$ was applied, which means that a ratio of 0.02 moles of Nb to 1 mole of LaNiO$_3$ was applied, resulting in an electrode having a composition of LaNiNb$_{0.02}$O$_{3.05}$.

(Comparative Example A1)

As a porous nickel substrate, a square of nickel expanded metal was prepared having a SW of 3.0 mm, a LW of 4.5 mm, a thickness of 1.2 mm, an open fraction of 54 %, and sides of length 10 cm. The nickel expanded metal was subjected to blasting treatment, then acid treatment in 6 N hydrochloric acid at 50 °C for 6 hours, then washed and dried to obtain the substrate for coating.

Next, a coating solution was prepared by mixing lanthanum acetate 1.5 hydrate and nickel nitrate hexahydrate to concentrations of 0.20 mol/L and 0.20 mol/L, respectively.

A vat containing the coating solution was disposed at the bottom of an ethylene propylene diene monomer (EPDM) coating roll, the coating roll was impregnated with the coating solution, a roll was disposed above so that the roll and the coating solution were always in contact, and a polyvinyl chloride (PVC) roller was disposed above to apply the coating solution to the substrate (roll method). The substrate was quickly passed between two EPDM sponge rolls before the coating solution dried. Then, after drying at 50 °C for 10 minutes, the metal oxide layer was formed on the substrate surface by baking at 400 °C for 10 minutes using a muffle furnace.

After repeating the cycle of roll coating, drying, and baking 75 times, the electrode was further baked at 600 °C for 1 hour to form a metal oxide layer having a coating weight of 303 g/m$^2$, to obtain the electrode of Comparative Example A1.

(Comparative Example A2)

The substrate for coating was prepared in the same way as in Comparative Example A1.

Next, the coating solution was prepared by mixing lanthanum nitrate hexahydrate, nickel nitrate hexahydrate, ammonium niobium oxalate n-hydrate, and glycine to concentrations of 0.20 mol/L, 0.16 mol/L, 0.04 mol/L, and 0.36 mol/L, respectively.

After repeating the cycle of roll coating, drying, and baking 40 times using the roll method used for Comparative Example A1, the electrode was further baked at 700 °C for 1 hour to form a metal oxide layer having a coating weight of 145 g/m$^2$, to obtain the electrode of Comparative Example A2.

(Method of measuring oxygen overvoltage and double layer capacitance of electrode initially and after 500 hours of energization)

The oxygen overvoltage of the electrode was measured using the following procedure.

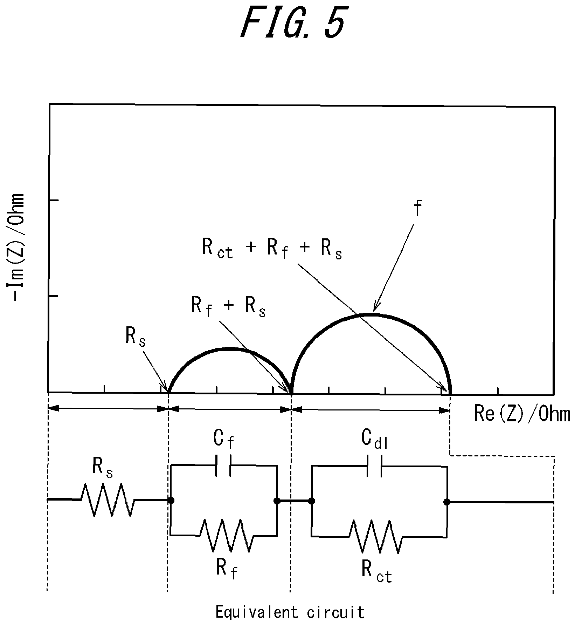

The sample electrode was cut out to be a square 2 cm long and 2 cm wide when viewed from the thickness direction and fixed by a nickel screw to a nickel rod coated with polytetrafluoroethylene (PTFE). Platinum mesh was used as the counter electrode, electrolysis performed at 80 °C, in 32 mass% sodium hydroxide aqueous solution, at a current density of 6 kA/m$^2$, and the oxygen overvoltage measured. The current density was calculated using an electrode area of 2 cm $\times$ 2 cm = 4 cm$^2$. The oxygen overvoltage was measured by a three-electrode method using a Luggin capillary to eliminate the effect of ohmic loss due to liquid resistance. The distance between the tip of the Luggin capillary and the anode was fixed at 1 mm. A potentiostat galvanostat "1470E System", manufactured by Solartron Analytical, was used as a device for measuring the oxygen overvoltage. Silver/silver chloride (Ag/AgCl) was used as the reference electrode for the three-electrode method. Electrolyte resistance, which cannot be eliminated using the three-electrode method, was measured using the AC impedance method, and the oxygen overvoltage described above was corrected based on the measured electrolyte resistance. After obtaining a Cole-Cole plot with real and imaginary parts plotted using a frequency response analyzer "1255B", manufactured by Solartron Analytical, analysis software ZView® (ZView is a registered trademark in Japan, other countries, or both), distributed by Scribner Associates, Inc., was used and the electrolyte resistance R$_s$ and double layer capacitance Cai were calculated using the equivalent circuit fitting model illustrated in FIG. 5. In FIG. 5, f represents the top frequency, R$_f$ the oxide film resistance, and R$_{ct}$ the charge transfer resistance. The double layer capacitance Cai was determined by the following formula.

[Num. 1]

$$C_{dl} = \frac{1}{2\pi f \cdot R_{ct}}$$

Ohmic loss that could not be eliminated using the three-electrode method was measured using the AC impedance method, and the oxygen overvoltage described above was corrected based on the measured value of ohmic loss. The frequency response analyzer "1255B", manufactured by Solartron Analytical, was used to measure ohmic loss.

Further, electrolysis was performed at 80 °C in 32 mass% sodium hydroxide solution for 500 hours at a current density of 6 kA/m², followed by similar measurements of the oxygen overvoltage and double layer capacitance of the electrode. Double layer capacitance was calculated using an electrode area of 4 cm².

The evaluation results of Examples A1 to A10 and Comparative Examples A1 and A2 are listed in Table 3.

(Method of measuring number of moles of La per cm² of electrode after 500 hours of energization)

A sample having an area of 2 cm² (length 1 cm × width 2 cm) was cut from the sample electrode (length 2 cm × width 2 cm, area 4 cm²) after electrolysis for 500 hours at a current density of 6 kA/m², sealed in a sealed container with a solution consisting of 6 ml of ultrapure water, 4.5 ml of 30 % hydrochloric acid and 1.5 ml of 68 % nitric acid, and heated to 95 °C for 30 minutes, dissolving all of the electrode catalyst and a portion of the substrate. First, ultrapure water was added to dilute the solution so that the total mass of the solution was 100 g. Next, 1 g of the 100 g solution was further diluted by adding 49 g of ultrapure water, and the concentration of La was measured by inductively coupled plasma atomic emission spectrometry (ICP-AES).

From the obtained La concentration and dilution ratio, the mass of La contained in the electrode sample having an area of 2 cm² was calculated. The number of moles of La (mmol) contained in the electrode sample having an area of 2 cm² was then calculated by dividing the mass of La by the atomic weight of La, 138.9. The number of moles of La was further divided by the 2 cm² of electrode area to calculate the number of moles of La per cm² of electrode (mmol/cm²) after 500 hours of energization.

The evaluation results of Examples A1 to A10 and Comparative Examples A1 and A2 are listed in Table 3.

(Method of calculating capacitance per mmol of La of electrode after 500 hours of energization)

The double layer capacitance (F/cm²) of the electrode after 500 hours of energization was divided by the number of moles of La per unit area (mmol/cm²) to calculate the capacitance per mmol of La (F/mmol$_{La}$) of the electrode after 500 hours of energization.

The evaluation results of Examples A1 to A10 and Comparative Examples A1 and A2 are listed in Table 3.

(Method of calculating combustion byproduct gases/LaNi$_x$M$_y$O$_{3-z}$ molar ratio)

Reaction equations for the baking of mixtures of anhydrous raw materials La, Ni, and M, hydrogen peroxide, and compounds composed of C, H, N, and O with carboxyl and amino groups were prepared by adding up the reaction equations for each raw material, taking into account the ratio of the preparation. The total number of moles of $CO_2$, $H_2O$, and $N_2$ that are byproducts when 1 mole of LaNi$_x$M$_y$O$_{3-z}$ is produced was calculated as the combustion byproduct gases/LaNi$_x$M$_y$O$_{3-z}$ molar ratio.

When LaNi$_x$M$_y$O$_{3-z}$ is prepared by combustion of LaNi$_x$O$_{3-z}$ and then raw material M is added separately to prepare LaNi$_x$M$_y$O$_{3-z}$, the $CO_2$, $H_2O$, and $N_2$ byproducts of combustion of the raw material M are not considered in the calculation of the combustion byproduct gases/LaNi$_x$M$_y$O$_{3-z}$ molar ratio.

The reaction equation for each raw material is as follows.

<La(NO$_3$)$_3$·6H$_2$O>

$$La(NO_3)_3 \rightarrow LaO_{1.5} + 1.5N_2 + 3.75O_2 \dots \qquad \text{(Equation 1)}$$

<Lanthanum acetate 1.5 hydrate>

$$(CH_3COO)_3La + 6O_2 \rightarrow LaO_{1.5} + 6CO_2 + 4.5H_2O \; ... \qquad \text{(Equation 2)}$$

<$Ni(NO_3)_2 \cdot 6H_2O$>

$$Ni(NO_3)_2 \rightarrow NiO_{1.5} + N_2 + 2.25O_2 \; ... \qquad \text{(Equation 3)}$$

<Ammonium niobium oxalate>

$$NH_4NbO(C_2O_4)_2 + 1.75O_2 \rightarrow 0.5N_2 + 4CO_2 + 2H_2O + NbO_{2.5} \; ... \qquad \text{(Equation 4)}$$

<$Nb_2O_5$ sol>

$$Nb_2O_5 \rightarrow 2NbO_{2.5} \; \text{(no byproduct gas generation)} \; ... \qquad \text{(Equation 5)}$$

<Hydrogen peroxide>

$$H_2O_2 \rightarrow H_2O + 0.5O_2 \; ... \qquad \text{(Equation 6)}$$

<$Mn(NO_3)_2 \cdot 6H_2O$>

$$Mn(NO_3)_2 \rightarrow MnO_{1.5} + N_2 + 2.25O_2 \; ... \qquad \text{(Equation 7)}$$

<$TiO_2$ sol>

$$TiO_2 \rightarrow TiO_2 \; \text{(no byproduct gas generation)} \; ... \qquad \text{(Equation 8)}$$

<$ZrO(NO_3)_2 \cdot 2H_2O$>

$$ZrO(NO_3)_2 \rightarrow ZrO_2 + N_2 + 2.5O_2 \; ... \qquad \text{(Equation 9)}$$

<TaCl$_5$>

$$TaCls + 1.25O_2 \rightarrow TaO_{2.5} + 2.5Cl_2 \dots \qquad \text{(Equation 10)}$$

<Antimony tartrate>

$$H(C_4H_2O_6)Sb + 3O_2 \rightarrow 4CO_2 + SbO_{2.5} + 1.5H_2O \dots \qquad \text{(Equation 11)}$$

<Glycine>

$$C_2H_5NO_2 + 2.25O_2 \rightarrow 2CO_2 + 2.5H_2O + 0.5N_2 \dots \qquad \text{(Equation 12)}$$

<Aspartic acid>

$$C_4H_7NO_4 + 3.75O_2 \rightarrow 4CO_2 + 3.5H_2O + 0.5N_2 \dots \qquad \text{(Equation 13)}$$

For example, when La(NO$_3$)$_3$·6H$_2$O, Ni(NO$_3$)$_2$·6H$_2$O, ammonium niobium oxalate, and glycine are mixed and burned in a molar ratio of 1 : 0.8 : 0.2 : 1.38, the reaction equation is (Equation A) below, which is (Equation 1) + 0.8 × (Equation 3) + 0.2 × (Equation 4) + 1.38 × (Equation 12), and the combustion byproduct gases/LaNi$_x$M$_y$O$_{3-z}$ molar ratio is 3.09 + 3.85 + 3.56 = 10.5.

$$La(NO_3)_3 + 0.8Ni(NO_3)_2 + 0.2\{NH_4NbO(C_2O_4)_2 + 1.75O_2\} + 1.38(C_2H_5NO_2 + 2.25O_2) \rightarrow (LaO_{1.5} + 1.5N_2 + 3.75O_2) + 0.8 (NiO_{1.5} + N_2 + 2.25O_2) + 0.2 (0.5N_2 + 4CO_2 + 2H_2O + NbO_{2.5}) + 1.38(2CO_2 + 2.5H_2O + 0.5N_2)$$
$$\rightarrow LaNi_{0.8}Nb_{0.2}O_{3.2} + 3.09N_2 + 5.55O_2 + 3.85H_2O + 3.56CO_2 \dots \qquad \text{(Equation A)}$$

The evaluation results of Examples A1 to A10 and Comparative Examples A1 and A2 are listed in Table 3.

(Example A11)

An electrolytic cell for alkaline water electrolysis and a bipolar electrolyzer was fabricated as follows.

-Anode-

The anode was prepared by the same method used for Example A5.

-Cathode-

As an electrically conductive substrate, platinum supported on a plain weave mesh substrate made of size 40 mesh of woven fine nickel wire having a diameter of 0.15 mm was used.

-Partition wall, outer frame-

A bipolar element including a partition wall that separates the anode from the cathode and an outer frame that surrounds the partition wall was used. Nickel was used as the material of all components in contact with the electrolyte, such as the partition walls and the frames of the bipolar elements.

-Electrically conductive elastic body-

The electrically conductive elastic body was made of woven nickel wire having a wire diameter of 0.15 mm and corrugated to a wave height of 5 mm.

-Membrane-

Zirconium oxide (product name "EP Zirconium Oxide", manufactured by Daiichi Kigenso Kagaku Kogyo Co., Ltd.), N-methyl-2-pyrrolidone (manufactured by Wako Pure Chemical Industries Ltd.), polysulfone (Udel® (Udel is a registered trademark in Japan, other countries, or both), manufactured by Solvay Co., Ltd.), and polyvinylpyrrolidone (weight average molecular weight (Mw) 900,000, manufactured by Wako Pure Chemical Industries, Ltd.) were used to obtain a coating solution having the following composition.

Polysulfone: 15 mass parts
Polyvinylpyrrolidone: 6 mass parts
N-methyl-2-pyrrolidone: 70 mass parts
Zirconium oxide: 45 mass parts

The above coating solution was applied to both surfaces of the substrate, which was polyphenylene sulfide mesh (280 $\mu$m film thickness, 358 $\mu$m gap, 150 $\mu$m fiber diameter, manufactured by Clever Co., Ltd.). Immediately after coating, the substrate coated with the coating solution was exposed to steam and then immersed in a solidifying bath to form a coating film on the substrate surface. The coating film was then thoroughly washed with pure water to obtain a porous membrane.

-Gasket-

A gasket was used that had a thickness of 4.0 mm, a width of 18 mm, and formed a square shape that had internal dimensions of 504 mm by 504 mm. In plan view, the gasket formed an internal opening that had the same dimensions as the electrode chamber, and the gasket had a slit structure to hold the membrane by insertion.

-Zero-gap bipolar element-

The external-header zero-gap cell unit 60 was rectangular, 540 mm $\times$ 620 mm, and the area of the energized surface of the anode 2a and the cathode 2c was 500 mm $\times$ 500 mm. The cathode side of the 60 zero-gap bipolar element includes the cathode chamber 5c, through which the electrolyte flowed, and in which the cathode 2c, the electrically conductive elastic body 2e, and a cathode collector 2r were stacked and connected to the partition wall 1 via the cathode ribs 6. On the anode side was the anode chamber 5a, through which the electrolyte flowed, and in which the anode 2a was connected to the partition wall 1 via the anode ribs 6 (FIG. 2).

The depth of the anode chamber 5a (anode chamber depth, distance between the partition wall and the anode in FIG. 2) was 25 mm, the depth of the cathode chamber 5c (cathode chamber depth, distance between the partition wall and the cathode collector in FIG. 2) was 25 mm, and the material was nickel. The thickness of the partition wall 1 made of nickel was 2 mm, with the anode ribs 6 made of nickel and 25 mm high and 1.5 mm thick and the cathode ribs 6 made of nickel and 25 mm high and 1.5 mm thick attached by welding.

A nickel expanded substrate that had already undergone blasting treatment was used as the cathode current collector 2r. The thickness of the substrate was 1 mm and the open fraction was 54 %. The electrically conductive elastic body 2e was fixed by spot welding on the cathode collector 2r. By stacking these zero-gap bipolar elements via the gasket holding the membrane, the zero-gap structure Z could be formed in which the anode 2a and the cathode 2c were pressed against the membrane 4.

Water electrolysis was performed using the electrolysis apparatus of Example A11 above, with the electrolyte temperature at 80 °C and the current density at 6 kA/m$^2$ for 500 hours of continuous positive current flow. The pair voltage of each cell of Example A11 was monitored and the pair voltage trends were recorded. The cell voltage of each cell was compared by taking the average of three cells of Example A11.

Example A11 had a low three cell average overvoltage of 1.73 V after 500 hours of energization. Therefore, it can be concluded that the anode of Example A5 was able to achieve a low cell voltage even during extended operation.

[Table 1]

| | Composition | Liquid A | | | | | Number of times liquid A is applied |
|---|---|---|---|---|---|---|---|
| | | Ni(NO3)2·6H2O (g) | La(NO)3·6H2O (g) | Glycine (g) | Deionized water (g) | Ethanol (g) | |
| Example A2 | LaNi0.85Nb0.15O3.15 | 98.86 | 173.2 | 35.28 | 400.0 | 0.0 | 30 times |
| Example A3 | LaNi0.795Nb0.005O2.705 | 92.46 | 173.2 | 31.70 | 400.0 | 0.0 | 25 times |
| Example A5 | LaNiNb0.02O3.05 | 116.30 | 173.2 | 22.52 | 400.0 | 0.0 | 16 times |
| Example A6 | LaNiNb0.05O3.125 | 69.78 | 103.9 | 16.22 | 200.0 | 200.0 | 20 times |
| Example A7 | LaNi1.1NB0.1O3.4 | 76.76 | 103.9 | 18.74 | 400.0 | 0.0 | 20 times |
| Example A9 | LaNiNb0.02O3.05 | 116.30 | 173.2 | 22.52 | 400.0 | 0.0 | 11 times |
| Example A10 | LaNiNb0.02O3.05 | 116.30 | 173.2 | 22.52 | 400.0 | 0.0 | 13 times |

[Table 2]

| | Composition | Liquid B | | Number of times liquid B is applied | Method of applying liquid B | Timing of liquid B application |
|---|---|---|---|---|---|---|
| | | Nb concentration in Nb sol (mmol/kg solution) | Nb concentration in ammonium niobium oxalate aqueous solution (mmol/kg solution) | | | |
| Example A2 | LaNi0.85Nb0.15O3.15 | 450 | - | 5 times | Spray method | Once per 6 applications of liquid A |
| Example A3 | LaNi0.795Nb0.005O2.705 | 90 | - | 1 time | Spray method | Once after 25 applications of liquid A |
| Example A5 | LaNiNb0.02O3.05 | 320 | - | 1 time | Spray method | Once after 16 applications of liquid A |
| Example A6 | LaNiNb0.05O3.125 | 400 | - | 2 times | Spray method | Twice after 20 applications of liquid A |
| Example A7 | LaNi1.1NB0.1O3.4 | - | 310 | 5 times | Dip method | Once per 4 applications of liquid A |

(continued)

| | Composition | Liquid B | | Number of times liquid B is applied | Method of applying liquid B | Timing of liquid B application |
|---|---|---|---|---|---|---|
| | | Nb concentration in Nb sol (mmol/kg solution) | Nb concentration in ammonium niobium oxalate aqueous solution (mmol/kg solution) | | | |
| Example A9 | LaNiNb0.02O3.05 | 220 | - | 1 time | Spray method | Once after 11 applications of liquid A |
| Example A10 | LaNiNb0.02O3.05 | 250 | - | 1 time | Spray method | Once after 13 applications of liquid A |

[Table 3]

| | Composition | Heteroelement M substitution amount y (LaNixMyO3-z) | x+y | Z | Coating weight (g/m$^2$) | Baking conditions | Molar ratio (Combustion byproduct gases / LaNixMyO3-z) | Initial | | After 500 hours of energization | | | |
|---|---|---|---|---|---|---|---|---|---|---|---|---|---|
| | | | | | | | | Double layer capacitance (F/cm$^2$) | Overvoltage (mV) | Double layer capacitance (F/cm$^2$) | Overvoltage (mV) | La moles per unit area (mmol/cm$^2$) | Capacitance per mmol of La (F/mmol$_{La}$) |
| Example A1 | LaNi0.8Nb0.2O3.2 | 0.2 | 1 | -0.2 | 502 | 750 °C 1 h | 10.5 | 0.65 | 239 | 0.70 | 232 | 0.18 | 40 |
| Example A2 | LaNi0.85Nb0.15O3.15 | 0.15 | 1 | -0.15 | 488 | 650 °C 1 h | 8.2 | 3.1 | 234 | 3.7 | 228 | 0.17 | 21 |
| Example A3 | LaNi0.795Nb0.005O2.705 | 0.005 | 0.8 | 0.295 | 501 | 700 °C 1 h | 7.6 | 1.7 | 235 | 2.5 | 219 | 0.18 | 14 |
| Example A4 | LaNiNb0.01O3.025 | 0.01 | 1.01 | -0.025 | 506 | 700 °C 1 h | 5.3 | 2.7 | 210 | 3.5 | 201 | 0.18 | 19 |
| Example A5 | LaNiNb0.02O3.05 | 0.02 | 1.02 | -0.05 | 505 | 700 °C 1 h | 6.3 | 2.1 | 217 | 3.1 | 203 | 0.18 | 17 |
| Example A6 | LaNiNb0.05O3.125 | 0.05 | 1.05 | -0.125 | 514 | 700 °C 1 h | 70 | 1.5 | 230 | 2.8 | 208 | 0.19 | 14 |
| Example A7 | LaNi1.1Nb0.1O3.4 | 0.1 | 1.2 | -0.4 | 526 | 600 °C 1 h | 7.8 | 3.5 | 218 | 4.0 | 213 | 0.18 | 23 |
| Example A8 | LaNiNb0.02O3.05 | 0.02 | 1.02 | -0.05 | 505 | 750 °C 1 h | 6.3 | 1.1 | 244 | 1.9 | 225 | 0.18 | 10 |
| Example A9 | LaNiNb0.02O3.05 | 0.02 | 1.02 | -0.05 | 354 | 700 °C 1 h | 6.3 | 1.6 | 239 | 2.5 | 223 | 0.13 | 19 |
| Example A10 | LaNiNb0.02O3.05 | 0.02 | 1.02 | -0.05 | 404 | 700 °C 1h | 6.3 | 2.0 | 222 | 2.8 | 210 | 0.15 | 19 |
| Comparative Example A1 | LaNiO3 | 0 | 1 | 0 | 303 | 600 °C 1h | 11.5 | 2.4 | 265 | 0.72 | 368 | 0.11 | 6.5 |
| Comparative Example A2 | LaNi0.8Nb0.2O3.2 | 0.2 | 1 | -0.2 | 145 | 700 °C 1h | 12.6 | 0.15 | 232 | 0.13 | 248 | 0.05 | 2.5 |

(Example B1)

As a porous nickel substrate, a square of nickel expanded metal was prepared having a SW of 3.0 mm, a LW of 4.5 mm, a thickness of 1.2 mm, and an open fraction of 54 %. The nickel expanded metal was subjected to blasting treatment, then a substrate having a length of 10 cm and a width of 10 cm was cut out, acid treated in 6 N hydrochloric acid at 50 °C for 6 hours, washed, and dried to obtain the substrate for coating.

Next, the liquid A and the liquid B having the composition of Example B1 were prepared, as in Table 4. The liquid B was prepared by dissolving ammonium niobium oxalate in pure water, and the concentration of Nb was confirmed by inductively coupled plasma atomic emission spectrometry (ICP-AES).

The liquid A was placed in a square polyethylene container having a base of 6 cm $\times$ 10 cm and a height of 11 cm, and the liquid B was mixed slowly while stirring with a magnetic stirrer to make the coating solution for Example B1.

While stirring the coating solution, the substrate for coating was turned vertically and the bottom half was immersed in the coating solution, then the substrate turned upside down and the top half also immersed in the coating solution. After coating, excess coating solution was blown off by an air blowing treatment using an air gun while the substrate remained vertically oriented.

The substrate was then dried at 60 °C for 10 minutes and further baked at 400 °C for 10 minutes to form a metal oxide layer on the substrate surface.

After repeating this cycle of coating, drying, and baking 13 times, the anode was further baked at 800 °C for 1 hour to form a metal oxide layer having a coating weight of 40 $g/m^2$ on the substrate for coating, to obtain the anode for water electrolysis.

(Examples B2 to B6)

The substrate for coating was prepared by the same method used for Example B1. The liquid A and the liquid B having the compositions of Examples B2 to B6 listed in Table 4 were prepared. The liquid A and the liquid B were mixed in a polyethylene container in the same way as in Example B1 to prepare the coating solutions of Examples B2 to B6. In the same way as in Example B1, the cycles of coating, drying, and baking were repeated, then baking was performed at 800 °C for 1 hour to form a metal oxide layer having a coating weight of 40 $g/m^2$ on the substrate for coating, to obtain the anode for water electrolysis of Examples B2 to B6.

(Example B7)

The coating solution of Example B7 was prepared by dissolving 9.30 g of $Ni(NO_3)_2 \cdot 6H_2O$, 34.64 g of $La(NO_3)_3 \cdot 6H_2O$, 30.03 g of glycine ($C_2H_5NO_2$) and 13.78 g of $Mn(NO_3)_2 \cdot 6H_2O$ in 400 g of pure water. The coating solution was transferred to a polyethylene container having a base of 13 cm $\times$ 13 cm and a height of 10 cm.

The substrate for coating was prepared in the same way as in Example B1. The substrate was completely immersed in the coating solution in the container and pulled up. After the entire surface of the substrate was coated with the coating solution, the substrate was turned vertically and excess coating solution was blown off by an air blowing treatment using an air gun.

The substrate was then dried at 60 °C for 10 minutes and further baked at 400 °C for 10 minutes to form a metal oxide layer on the substrate surface.

After repeating this cycle of coating, drying, and baking 13 times, the anode was further baked at 800 °C for 1 hour to form a metal oxide layer having a coating weight of 40 $g/m^2$ on the substrate for coating, to obtain the anode for water electrolysis.

(Example B8)

18.61 g of $Ni(NO_3)_2 \cdot 6H_2O$, 34.64 g of $La(NO_3)_3 \cdot 6H_2O$ and 27.63 g of glycine were dissolved in 200 g of pure water to make the liquid A of Example B8. A $TiO_2$ sol having a primary particle size of 10 nm was diluted with pure water to prepare 200 g of $TiO_2$ sol having a Ti concentration of 80 mmol/kg sol, which was used as the liquid B of Example B8.

As in Example B1, the liquid A and the liquid B were mixed in a square polyethylene container to make the coating solution of Example B8. As in Example B1, after repeating the coating, drying, and baking cycles, baking was performed at 800 °C for 1 hour to form a metal oxide layer having a coating weight of 40 $g/m^2$ on the substrate for coating, to obtain the anode for water electrolysis of Example B8.

(Example B9)

The coating solution of Example B9 was prepared by dissolving 20.93 g of $Ni(NO_3)_2 \cdot 6H_2O$, 34.64 g of

La(NO$_3$)$_3$·6H$_2$O, 30.03 g of glycine, and 2.14 g of ZrO(NO$_3$)$_2$·2H$_2$O in 400 g of pure water.

The anode for water electrolysis of Example B9 was then obtained in the same way as in Example B7.

(Example B10)

The coating solution of Example B10 was prepared by dissolving 26.75 g of Ni(NO$_3$)$_2$·6H$_2$O, 34.64 g of La(NO$_3$)$_3$·6H$_2$O, 31.83 g of glycine, and 1.43 g of TaCl$_5$ in 400 g of pure water.

The anode for water electrolysis of Example B10 was then obtained in the same way as in Example B7.

(Example B11)

17.45 g of Ni(NO$_3$)$_2$·6H$_2$O, 34.64 g of La(NO$_3$)$_3$·6H$_2$O and 27.03 g of glycine were dissolved in 200 g of pure water to make the liquid A of Example B11. Antimony tartrate was dissolved in pure water to prepare 200 g of antimony tartrate solution having an Sb concentration of 20 mmol/kg solution, which was used as the liquid B of Example B11. The concentration of Sb was confirmed by inductively coupled plasma atomic emission spectrometry (ICP-AES).

As in Example B1, the liquid A and the liquid B were mixed in a square polyethylene container to make the coating solution of Example B11. As in Example B1, after repeating the coating, drying, and baking cycles, baking was performed at 800 °C for 1 hour to form a metal oxide layer having a coating weight of 40 g/m$^2$ on the substrate for coating, to obtain the anode for water electrolysis of Example B11.

(Example B12)

The coating solution of Example B12 was prepared by dissolving 23.26 g of Ni(NO$_3$)$_2$·6H$_2$O, 34.64 g of La(NO$_3$)$_3$·6H$_2$O and 30.03 g of glycine in 400 g of pure water.

The substrate for coating was prepared by the same method as that of Example B1. Using a spray coating device (rCoater®, sold by Asahi Sunac Corporation), the coating solution was applied to both sides of the substrate, dried at 60 °C for 10 minutes, and then baked at 400 °C for 10 minutes to form a metal oxide layer on the substrate surface.

This cycle of application, drying, and baking was repeated 24 times.

Further, a Nb$_2$O$_5$ sol having a Nb concentration of 200 mmol/kg sol was prepared by diluting a Nb$_2$O$_5$ sol having a primary particle size of 5 nm or less.

The Nb$_2$O$_5$ sol was applied on both sides by a spray coating device and dried at 60 °C for 10 minutes. The weight increase relative to the substrate before coating was calculated to be 38 mg. The coating weight of LaNiO$_3$ on the substrate was 1.4 g, the weight of 1 mole of LaNiO$_3$ is 245.6 g, the weight of 1 mole of Nb$_2$O$_5$ is 265.2 g, and 38 mg of Nb$_2$O$_5$ was applied, resulting in a ratio of 0.05 moles of Nb to 1 mole of LaNiO$_3$.

The substrate dried at 60 °C for 10 minutes was baked at 400 °C for 10 minutes and further baked at 800 °C for 1 hour to form a metal oxide layer having a coating weight of 144 g/m$^2$, to obtain the anode for water electrolysis of Example B12.

(Example B13)

The coating solution of Example B13 was prepared in the same way as in Example B12. The coating solution was then transferred to a polyethylene container having a base of 13 cm × 13 cm and a height of 10 cm.

The substrate for coating was prepared by the same method used for Example B1. The substrate was completely immersed in the coating solution in the container and pulled up. After the entire surface of the substrate was coated with the coating solution, the substrate was turned sideways and excess coating solution was blown off by an air blowing treatment using an air gun. The substrate was then dried at 60 °C for 10 minutes and further baked at 400 °C for 10 minutes to form a metal oxide layer on the substrate surface.

This cycle of application, drying, and baking was repeated 24 times.

Ammonium niobium oxalate was dissolved in pure water to prepare an aqueous solution of ammonium niobium oxalate having a Nb concentration of 43.8 mmol/kg solution. The aqueous solution of ammonium niobium oxalate was transferred to a polyethylene container having a base of 13 cm × 13 cm and a height of 10 cm.

The substrate with a metal oxide layer formed on the substrate surface was completely immersed in the aqueous solution of ammonium niobium oxalate and pulled up. After the entire surface of the substrate was coated with the coating solution, the substrate was turned sideways and a weak air flow applied by an air gun to remove coating solution that was clogging the mesh of the substrate. After the air gun treatment, the substrate was weighed and 1.3 g of aqueous ammonium niobium oxalate solution was found to have been applied to the substrate. The coating weight of LaNiO$_3$ on the substrate was 1.4 g, the weight of 1 mole of LaNiO$_3$ is 245.6 g, and 1.3 g of aqueous ammonium niobium oxalate solution having a Nb concentration of 43.8 mmol/kg solution was applied, resulting in a ratio of 0.01 moles of Nb to 1

mole of LaNiO$_3$.

The substrate coated with the aqueous solution of ammonium niobium oxalate was dried at 60 °C for 10 minutes, baked at 400 °C for 10 minutes, and further baked at 800 °C for 1 hour to form a metal oxide layer having a coating weight of 141 g/m$^2$, to obtain the anode for water electrolysis of Example B13.

(Example B14)

Similarly to Example B13, the drying and baking cycle was repeated 24 times, followed by baking at 800 °C for 1 hour to form a metal oxide layer on the substrate surface.

Ammonium niobium oxalate was dissolved in pure water to prepare an aqueous solution of ammonium niobium oxalate having a Nb concentration of 87.7 mmol/kg solution. The aqueous solution of ammonium niobium oxalate was transferred to a polyethylene container having a base of 13 cm × 13 cm and a height of 10 cm.

The substrate with a metal oxide layer formed on the substrate surface was completely immersed in the aqueous solution of ammonium niobium oxalate and pulled up. After the entire surface of the substrate was coated with the coating solution, the substrate was turned sideways and a weak air flow applied by an air gun to remove coating solution that was clogging the mesh of the substrate. After the air gun treatment, the substrate was weighed and 1.3 g of aqueous ammonium niobium oxalate solution was found to have been applied to the substrate. The coating weight of LaNiO$_3$ on the substrate was 1.4 g, the weight of 1 mole of LaNiO3 was 245.6 g, and 1.3 g of aqueous ammonium niobium oxalate solution having a Nb concentration of 87.7 mmol/kg solution was applied, resulting in a ratio of 0.02 moles of Nb to 1 mole of LaNiO$_3$.

The substrate coated with the aqueous solution of ammonium niobium oxalate was dried at 60 °C for 10 minutes, baked at 400 °C for 10 minutes, and further baked at 800 °C for 1 hour to form a metal oxide layer having a coating weight of 142 g/m$^2$, to obtain the anode for water electrolysis of Example B14.

(Example B15)

Similarly to Example B13, the drying and baking cycle was repeated 33 times, followed by baking at 800 °C for 1 hour to form a metal oxide layer on the substrate surface.

Subsequently, an aqueous solution of ammonium niobium oxalate having a Nb concentration of 125 mmol/kg solution was prepared and applied using the same method used for Example B14 at a ratio of 0.02 moles of Nb to 1 mole of LaNiO$_3$, drying at 60 °C for 10 minutes and baking at 400 °C for 10 minutes. After which, further baking was performed at 800 °C for 1 hour to form a metal oxide layer having a coating weight of 202 g/m$^2$, to obtain the anode for water electrolysis of Example B15.

(Comparative Example B1)

The substrate for coating was prepared in the same way as in Example B1.

Next, a coating solution was prepared by mixing lanthanum acetate 1.5 hydrate and nickel nitrate hexahydrate to concentrations of 0.20 mol/L and 0.20 mol/L, respectively.

A vat containing the coating solution was disposed at the bottom of an EPDM coating roll, the coating roll was impregnated with the coating solution, a roll was disposed above so that the roll and the coating solution were always in contact, and a polyvinyl chloride (PVC) roller was disposed above to apply the coating solution to the substrate (roll method). The substrate was quickly passed between two EPDM sponge rolls before the coating solution dried. Then, after drying at 50 °C for 10 minutes, the metal oxide layer was formed on the substrate surface by baking at 400 °C for 10 minutes using a muffle furnace.

After repeating the cycle of roll coating, drying, and baking 13 times, the anode was further baked at 800 °C for 1 hour to form a metal oxide layer having a coating weight of 42 g/m$^2$, to obtain the anode for water electrolysis.

(Comparative Example B2)

The substrate for coating was prepared in the same way as in Example B1.

Next, the coating solution was prepared with lanthanum nitrate hexahydrate, nickel nitrate hexahydrate, ammonium niobium oxalate n-hydrate, and glycine at concentrations of 0.20 mol/L, 0.16 mol/L, 0.04 mol/L, and 0.36 mol/L, respectively.

After repeating the cycle of roll coating, drying, and baking 40 times using the roll method used for Comparative Example B1, the anode was further baked at 700 °C for 1 hour to form a metal oxide layer having a coating weight of 145 g/m$^2$, to obtain the anode for water electrolysis.

(XRD measurement method)

The sample anode was cut to form a square 2 cm in length and 2 cm in width when viewed from the thickness direction and measured using the XRD measurement apparatus D8 ADVANCE (sold by Bruker Corporation). The sample anode was positioned in the center position of a bulk sample holder (groove 40 mm in diameter, depth 6 mm, material polymethyl methacrylate (PMMA)), and a piece of clay was placed under the four corners of the sample electrode so that the surface height was the same as the height of an edge of the holder, and the sample electrode was held in place by pressure from above. Measurements were taken in 3,080 steps over a range of $2\theta = 10°$ to $70°$ with the sample rotating at 15 rpm, taking 4 seconds per step. The X-rays were Cu K$\alpha$1 rays, using a voltage of 40 kV and current of 40 mA for the X-ray source. A divergence slit of $0.8°$ was used. Other instrument settings (overview data) such as detectors and filters that may be checked in measurement condition setting software XRD WIZARD are listed in Table 5.

Using analysis software DIFFRAC.EVA, a peak search of the XRD spectrum was performed using the "Peak Search" tool, and the peak position $2\theta$ of each peak was determined.

The main peak position of LaNi$_x$M$_y$O$_{3-z}$ was detected by a peak search for the main peak of NiO around $2\theta = 43.276°$, and the detected value of the main peak position $2\theta$ of NiO was calculated after shift-correction of the XRD spectrum using the "X-axis offset" tool so that $2\theta = 43.276°$ for the (200) plane of NiO, as in the PDF 00-047-1049 data.

The main peak position of LaNi$_x$M$_y$O$_{3-z}$ shifts depending on the sample, but with reference to the (104) plane main peak position $2\theta = 33.166°$ in the PDF 01-070-5757 data, the peak position around $2\theta = 32.5°$ to $33.2°$ was taken as the main peak position of LaNi$_x$M$_y$C$_{3-z}$.

The main peak intensity of LaNi$_x$M$_y$O$_{3-z}$ was the net intensity of the LaNi$_x$M$_y$O$_{3-z}$ main peak as calculated by the "Peak Search" tool.

The main peak full width at half maximum of LaNi$_x$M$_y$O$_{3-z}$ was determined by using the "Create Area" tool of the analysis software DIFFRAC.EVA, selecting an area with the left end set at $31°$ and the right end at $35°$, and calculating the full width at half maximum.

The evaluation results of Examples B1 to B15 and Comparative Examples B1 and B2 are listed in Table 6.

(Alkali resistance test)

The sample anode was cut to form a square of 2 cm in length and 2 cm in width when viewed from the thickness direction, XRD was measured, and the main peak intensity of LaNi$_x$M$_y$O$_{3-z}$ was calculated.

The following procedure was used for the alkali resistance test.

The sample anode was placed in a 19 mL capacity perfluoroalkoxy alkane (PFA) sealed container (outer diameter 30 mm, height 44 mm including lid, volume), filled with 8 mol/L potassium hydroxide aqueous solution (sold by Kanto Kagaku), and sealed.

Subsequently, the sealed PFA container was placed in a forced convection oven (product name DKN402, manufactured by Yamato Scientific Co., Ltd.) and heated so that the liquid temperature in the sealed container reached 90 °C. The container was kept at 90 °C for 24 hours, and then removed from the forced convection oven and ice-cooled.

The electrode was removed from the sealed container, washed and dried, and XRD was measured again to calculate the main peak intensity of LaNi$_x$M$_y$O$_{3-z}$.

As an index of alkali resistance, the peak intensity retention rate was determined by the following formula.

$$\text{(Peak intensity retention rate (\%))} = \text{(XRD main peak intensity of}$$

$$\text{LaNi}_x\text{M}_y\text{O}_{3-z} \text{ after alkali resistance test)} / \text{(XRD main peak intensity of}$$

$$\text{LaNi}_x\text{M}_y\text{O}_{3-z} \text{ before alkali resistance test)} \times 100$$

The evaluation results of Examples B1 to B15 and Comparative Examples B1 and B2 are listed in Table 6.

(Measurement of oxygen overvoltage after anode alkali resistance test)

The oxygen overvoltage of the anode after the alkali resistance test was measured by the following procedure.

After the alkali resistance test, the anode (2 cm long × 2 cm wide) was fixed by a nickel screw to a nickel rod coated with PTFE. Platinum mesh was used as the counter electrode, electrolysis performed at 80 °C, in 32 wt% sodium hydroxide aqueous solution, at a current density of 6 kA/m$^2$, and the oxygen overvoltage measured. The current density was calculated using an electrode area of 2 cm × 2 cm = 4 cm$^2$. The oxygen overvoltage was measured by a three-electrode method using a Luggin capillary to eliminate the effect of ohmic loss due to liquid resistance. The distance between the tip of the Luggin capillary and the anode was fixed at 1 mm. A potentiostat galvanostat "1470E System", manufactured by Solartron Analytical, was used as a device for measuring the oxygen overvoltage. Silver/silver chloride (Ag/AgCl) was used as the reference electrode for the three-electrode method. Electrolyte resistance, which cannot be eliminated using the three-electrode method, was measured using the AC impedance method, and the oxygen overvoltage described above was corrected based on the measured electrolyte resistance.

Electrolyte resistance and double layer capacitance were calculated by obtaining a Cole-Cole plot with real and imaginary parts, using a frequency response analyzer "1255B", manufactured by Solartron Analytical, followed by analysis by equivalent circuit fitting. Double layer capacitance was calculated using an electrode area of 2 cm $\times$ 2 cm = 4 cm$^2$.

Ohmic loss that could not be eliminated using the three-electrode method was measured using the AC impedance method, and the oxygen overvoltage described above was corrected based on the measured value of ohmic loss. The frequency response analyzer "1255B", manufactured by Solartron Analytical, was used to measure ohmic loss.

The evaluation results of Examples B1 to B15 and Comparative Examples B1 and B2 are listed in Table 6.

(Method of measuring initial double layer capacitance of electrode)

The double layer capacitance was measured by the same method used for Example A and Comparative Example A, described above.

The measurement results for Examples B1 to B15 and Comparative Examples B1 and B2 are listed in Table 6.

(Method of calculating combustion byproduct gases/LaNi$_x$M$_y$O$_{3-z}$ molar ratio)

The combustion byproduct gases/LaNi$_x$M$_y$O$_{3-z}$ molar ratio was calculated by the same method as used for Example A and Comparative Example A above.

The measurement results for Examples B1 to B15 and Comparative Examples B1 and B2 are listed in Table 6.

(Example B16)

An electrolytic cell for alkaline water electrolysis and a bipolar electrolyzer was fabricated as follows.

-Anode-

The anode was prepared by the same method used for Example B14.

-Cathode-

As an electrically conductive substrate, platinum supported on a plain weave mesh substrate made of size 40 mesh of woven fine nickel wire having a diameter of 0.15 mm was used.

-Partition wall, outer frame-

A bipolar element including a partition wall that separates the anode from the cathode and an outer frame that surrounds the partition wall was used. Nickel was used as the material of all components in contact with the electrolyte, such as the partition walls and the frames of the bipolar elements.

-Electrically conductive elastic body-

The electrically conductive elastic body was made of woven nickel wire having a wire diameter of 0.15 mm and corrugated to a wave height of 5 mm.

-Membrane-

Zirconium oxide (product name "EP Zirconium Oxide", manufactured by Daiichi Kigenso Kagaku Kogyo Co., Ltd.), N-methyl-2-pyrrolidone (manufactured by Wako Pure Chemical Industries Ltd.), polysulfone (Udel®, manufactured by Solvay Co., Ltd.), and polyvinylpyrrolidone (weight average molecular weight (Mw) 900,000, manufactured by Wako Pure Chemical Industries, Ltd.) were used to obtain a coating solution having the following composition.

Polysulfone: 15 mass parts
Polyvinylpyrrolidone: 6 mass parts
N-methyl-2-pyrrolidone: 70 mass parts
Zirconium oxide: 45 mass parts

The above coating solution was applied to both surfaces of the substrate, which was polyphenylene sulfide mesh (280 $\mu$m film thickness, 358 $\mu$m gap, 150 $\mu$m fiber diameter, manufactured by Clever Co., Ltd.). Immediately after coating, the substrate coated with the coating solution was exposed to steam and then immersed in a solidifying bath to form a coating film on the substrate surface. The coating film was then thoroughly washed with pure water to obtain a porous membrane.

-Gasket-

A gasket was used that had a thickness of 4.0 mm, a width of 18 mm, and formed a square shape that had internal dimensions of 504 mm by 504 mm. In plan view, the gasket formed an internal opening that had the same dimensions as the electrode chamber, and the gasket had a slit structure to hold the membrane by insertion.

-Zero-gap bipolar element-

The external-header zero-gap cell unit 60 was rectangular, 540 mm × 620 mm, and the area of the energized surface of the anode 2a and the cathode 2c was 500 mm × 500 mm. The cathode side of the 60 zero-gap bipolar element includes the cathode chamber 5c, through which the electrolyte flowed, and in which the cathode 2c, the electrically conductive elastic body 2e, and a cathode collector 2r were stacked and connected to the partition wall 1 via the cathode ribs 6. On the anode side was the anode chamber 5a, through which the electrolyte flowed, and in which the anode 2a was connected to the partition wall 1 via the anode ribs 6 (FIG. 2).

The depth of the anode chamber 5a (anode chamber depth, distance between the partition wall and the anode in FIG. 2) was 25 mm, the depth of the cathode chamber 5c (cathode chamber depth, distance between the partition wall and the cathode collector in FIG. 2) was 25 mm, and the material was nickel. The thickness of the partition wall 1 made of nickel was 2 mm, with the anode ribs 6 made of nickel and 25 mm high and 1.5 mm thick and the cathode ribs 6 made of nickel and 25 mm high and 1.5 mm thick attached by welding.

A nickel expanded substrate that had already undergone blasting treatment was used as a current collector, the cathode current collector 2r. The thickness of the substrate was 1 mm and the open fraction was 54 %. The electrically conductive elastic body 2e was fixed by spot welding on the cathode collector 2r. By stacking these zero-gap bipolar elements via the gasket holding the membrane, the zero-gap structure Z could be formed in which the anode 2a and the cathode 2c were pressed against the membrane 4.

(Comparative Example B3)

A zero-gap bipolar element was produced in the same way as in Example B15, except that the anode made in the same way as in Comparative Example B2 was used.

Water electrolysis was performed using the electrolysis apparatus for Example B16 and Comparative Example B3 by keeping the electrolyte at 90 °C and circulating for 24 hours, then lowering the electrolyte temperature to 80 °C and continuously conducting positive current for 500 hours to achieve a current density of 6 kA/m$^2$. The pair voltages of each cell of Example B16 and Comparative Example B3 were monitored and the pair voltage trends were recorded. The cell voltage of each cell was compared by taking the average of three cells of each of Example B16 and Comparative Example B3.

For Example B16, the three cell average overvoltage was as low as 1.77 V after 500 hours of energizing, while for Comparative Example B3, the three cell average overvoltage was as high as 1.95 V after 500 hours of energizing. Therefore, it can be concluded that the anode of Example B16 has a higher alkali durability than that of Comparative Example B3, resulting in a lower cell voltage even during extended operation.

[Table 4]

| | Composition | Liquid A | | | | Liquid B | |
|---|---|---|---|---|---|---|---|
| | | Ni(NO3) 2·6H2O (g) | La(NO) 3·6H2O (g) | Glycine (g) | Deionized water (g) | Nb concentration in ammonium niobium oxalate aqueous solution (mmol/kg solution) | Weight of ammonium niobium oxalate aqueous solution (g) |
| Example B1 | LaNi0.999Nb0.001O3.001 | 23.24 | 34.64 | 30.02 | 200 | 0.4 | 200 |
| Example B2 | LaNi0.998Nb0.002O3.002 | 23.21 | 34.64 | 30.00 | 200 | 0.8 | 200 |
| Example B3 | LaNi0.995Nb0.005O3.005 | 23.14 | 34.64 | 29.97 | 200 | 2 | 200 |
| Example B4 | LaNi0.9Nb0.1O3.1 | 20.93 | 34.64 | 28.83 | 200 | 40 | 200 |
| Example B5 | LaNi0.85Nb0.15O3.15 | 19.77 | 34.64 | 28.23 | 200 | 60 | 200 |
| Example B6 | LaNi0.8Nb0.2O3.2 | 18.61 | 34.64 | 27.63 | 200 | 80 | 200 |

EP 4 317 054 A1

[Table 5]

| Overview data: | |
|---|---|
| | range independent data |
| Detector | PSD: LynxEye |
| K Beta-Filter | yes |
| Prime Soller | 2.5 |
| Fixed Div Slit | 0.6 |
| Sec Soller | 2.5 |
| Detector Slit | 12.21 |
| Fixed Anti Sc Slit | 6.94 |

[Table 6]

| | Composition | Heteroelement M substitution amount y (LaNixMyO3-z) | x+y | z | Baking temp. (°C) | Coating weight (g/m²) | Molar ratio (Combustion byproduct gases / LaNixMyO3-z) | Peak Position (°) | Full width at half maximum (°) | Peak intensity | Alkali resistance test peak intensity retention rate (%) | Overvoltage after alkali resistance test (mV) | Initial double layer capacitance (F/cm²) |
|---|---|---|---|---|---|---|---|---|---|---|---|---|---|
| Example B1 | LaNi0.999Nb0.001O3.001 | 0.001 | 1 | -0.001 | 800 | 40 | 27.5 | 32.859 | 0.637 | 19800 | 85 | 298 | 0.71 |
| Example B2 | LaNi0.998Nb0.002O3.002 | 0.002 | 1 | -0.002 | 800 | 40 | 27.5 | 32.852 | 0.638 | 16500 | 91 | 285 | 0.69 |
| Example B3 | LaNi0.995Nb0.005O3.005 | 0.005 | 1 | -0.005 | 800 | 40 | 27.5 | 32.848 | 0.641 | 13500 | 93 | 281 | 0.68 |
| Example B4 | LaNi0.9Nb0.1O3.1 | 0.1 | 1 | -0.1 | 800 | 40 | 27.1 | 32.82 | 0.710 | 6970 | 97 | 270 | 0.65 |
| Example B5 | LaNi0.85Nb0.15O3.15 | 0.15 | 1 | -0.15 | 800 | 40 | 26.8 | 32.812 | 0.732 | 6370 | 98 | 274 | 0.63 |
| Example B6 | LaNi0.8Nb0.2O3.2 | 0.2 | 1 | -0.2 | 800 | 40 | 26.6 | 32.805 | 0.744 | 6120 | 99 | 280 | 0.61 |
| Example B7 | LaNi0.4Mn0.6O3 | 0.6 | 1 | 0 | 800 | 40 | 27.5 | 32.608 | 0.834 | 6010 | 90 | 281 | 0.61 |
| Example B8 | LaNi0.8Ti02O3.1 | 0.2 | 1 | -0.1 | 800 | 40 | 25.3 | 32.754 | 0.762 | 6470 | 88 | 292 | 0.61 |
| Example B9 | LaNi0.9Zr0.1O3.05 | 0.1 | 1 | -0.05 | 800 | 40 | 27.5 | 32.752 | 0.725 | 7320 | 82 | 288 | 0.63 |
| Example B10 | LaNi1.15Ta0.05O3.35 | 0.05 | 1.2 | -0.35 | 800 | 40 | 29.2 | 32.807 | 0.842 | 6830 | 92 | 285 | 0.63 |
| Example B11 | LaNi0.75Sb0.05O2.75 | 0.05 | 0.8 | 0.25 | 800 | 40 | 25.0 | 32.703 | 0.836 | 6050 | 89 | 289 | 0.62 |
| Example B12 | LaNiNb0.05O3.125 | 0.05 | 1.05 | -0.125 | 800 | 144 | 27.5 | 33.078 | 0.693 | 8110 | 96 | 252 | 1.2 |
| Example B13 | LaNiNb0.01O3.025 | 0.01 | 1.01 | -0.025 | 800 | 141 | 27.5 | 33.088 | 0.660 | 11000 | 95 | 240 | 1.5 |
| Example B14 | LaNiNb0.02O3.05 | 0.02 | 1.02 | -0.05 | 800 | 142 | 27.5 | 33.084 | 0.669 | 9930 | 96 | 246 | 1.4 |
| Example B15 | LaNiNb0.02O3.05 | 0.02 | 1.02 | -0.05 | 800 | 202 | 27.5 | 33.198 | 0.708 | 12400 | 97 | 234 | 1.3 |
| Comparative Example B1 | LaNiO$_3$ | 0 | 1 | 0 | 800 | 42 | 11.5 | 32.867 | 0.592 | 22000 | 58 | 324 | 0.36 |
| Comparative Example B2 | LaNi0.8Nb0.2O3.2 | 0.2 | 1 | -0.2 | 700 | 145 | 12.6 | 32.575 | 0.854 | 5420 | 54 | 312 | 0.15 |

(Example C1)

The liquid A and the liquid B were prepared with the composition of Example C1 in Table 7. The liquid B was prepared by dissolving ammonium niobium oxalate in pure water, and the concentration of Nb was confirmed by inductively coupled plasma atomic emission spectrometry (ICP-AES).

The liquid A was placed in a square polyethylene container having a base of 6 cm × 10 cm and a height of 11 cm, and the liquid B was mixed slowly while stirring with a magnetic stirrer to make the coating solution for Example C1.

As a porous nickel substrate, a square of nickel expanded metal was prepared having a SW of 3.0 mm, a LW of 4.5 mm, a thickness of 1.2 mm, and an open fraction of 54 %. The nickel expanded metal was subjected to blasting treatment with #100 white fused alumina abrasive, then acid treated in 6 N hydrochloric acid at 50 °C for 6 hours, washed and dried to obtain the substrate for coating.

The substrate was turned vertically and the bottom half was immersed in the coating solution in the container, then the substrate was pulled up, turned upside down, and the top half also immersed in the solution so that the entire surface of the substrate was coated with the coating solution. The substrate was then turned sideways and excess coating solution was blown off by an air blowing treatment using an air gun. The substrate was then dried at 60 °C for 10 minutes and further baked at 400 °C for 10 minutes to form a metal oxide layer on the substrate surface.

This cycle of application, drying, and baking was repeated 50 times. Then, further baking at 800 °C for 1 hour was performed to form a metal oxide layer having a coating weight of 503 g/m$^2$ on the substrate for coating, to obtain the anode for water electrolysis of Example C1.

(Example C2)

The procedure used for Example C1 was repeated except that the liquid A and the liquid B were prepared having the compositions of Example C2 in Table 7, and the cycle of application, drying, and baking was repeated 33 times. Then, further baking at 800 °C for 1 hour was performed to form a metal oxide layer having a coating weight of 496 g/m$^2$ on the substrate for coating, to obtain the anode for water electrolysis of Example C2.

(Example C3)

The procedure used for Example C1 was repeated except that the liquid A and the liquid B were prepared having the compositions of Example C3 in Table 7, and the cycle of application, drying, and baking was repeated 25 times. Then, further baking at 750 °C for 1 hour was performed to form a metal oxide layer having a coating weight of 498 g/m$^2$ on the substrate for coating, to obtain the anode for water electrolysis of Example C3.

(Example C4)

The coating solution of Example C4 was prepared by dissolving 34.89 g of $Ni(NO_3)_2 \cdot 6H_2O$, 51.96 g of $La(NO_3)_3 \cdot 6H_2O$, and 45.04 g of glycine in 400 g of pure water. The coating solution was then transferred to a polyethylene container having a base of 13 cm × 13 cm and a height of 10 cm.

The substrate was prepared as in Example C1. The substrate was completely immersed in the coating solution in the container, then the substrate was pulled up, turned sideways, and excess coating solution was blown off by an air blowing treatment using an air gun. The substrate was then dried at 60 °C for 10 minutes and further baked at 400 °C for 10 minutes to form a metal oxide layer on the substrate surface. This cycle of application, drying, and baking was repeated 49 times.

Ammonium niobium oxalate was dissolved in pure water to prepare an aqueous solution of ammonium niobium oxalate having a Nb concentration of 157 mmol/kg solution. The aqueous solution of ammonium niobium oxalate was transferred to a polyethylene container having a base of 13 cm × 13 cm and a height of 10 cm.

The substrate with a metal oxide layer formed on the substrate surface was completely immersed in the aqueous solution of ammonium niobium oxalate and pulled up. After the entire surface of the substrate was coated with the coating solution, the substrate was turned sideways and a weak air flow applied by an air gun to remove coating solution that was clogging the mesh of the substrate. After the air gun treatment, the substrate was weighed and 1.3 g of aqueous ammonium niobium oxalate solution was found to have been applied to the substrate. The coating weight of $LaNiO_3$ on the substrate was 5.0 g, the weight of 1 mole of $LaNiO_3$ is 245.6 g, and 1.3 g of aqueous ammonium niobium oxalate solution having a Nb concentration of 157 mmol/kg solution was applied, resulting in a ratio of 0.01 moles of Nb to 1 mole of $LaNiO_3$.

The substrate coated with the aqueous solution of ammonium niobium oxalate was dried at 60 °C for 10 minutes, baked at 400 °C for 10 minutes, and further baked at 800 °C for 1 hour to form a metal oxide layer having a coating weight of 512 g/m$^2$, to obtain the anode for water electrolysis of Example C4.

(Example C5)

The coating solution of Example C5 was prepared by dissolving 40.71 g of $Ni(NO_3)_2 \cdot 6H_2O$, 60.62 g of $La(NO_3)_3 \cdot 6H_2O$, and 52.55 g of glycine in 400 g of pure water. The coating solution was then transferred to a polyethylene container having a base of 13 cm $\times$ 13 cm and a height of 10 cm.

As in Example C4, the substrate was completely immersed in the coating solution in the container, then the substrate was pulled up, turned sideways, and excess coating solution was blown off by an air blowing treatment using an air gun. The substrate was then dried at 60 °C for 10 minutes and further baked at 400 °C for 10 minutes to form a metal oxide layer on the substrate surface. This cycle of application, drying, and baking was repeated 32 times.

Ammonium niobium oxalate was dissolved in pure water to prepare an aqueous solution of ammonium niobium oxalate having a Nb concentration of 261 mmol/kg solution. The aqueous solution of ammonium niobium oxalate was transferred to a polyethylene container having a base of 13 cm $\times$ 13 cm and a height of 10 cm.

The substrate with a metal oxide layer formed on the substrate surface was completely immersed in the aqueous solution of ammonium niobium oxalate and pulled up. After the entire surface of the substrate was coated with the coating solution, the substrate was turned sideways and a weak air flow applied by an air gun to remove coating solution that was clogging the mesh of the substrate. After the air gun treatment, the substrate was weighed and 1.3 g of aqueous ammonium niobium oxalate solution was found to have been applied to the substrate. The substrate coated with the aqueous solution of ammonium niobium oxalate was dried at 60 °C for 10 minutes and then baked at 400 °C for 10 minutes. After the cycle of applying 1.3 g of the aqueous ammonium niobium oxalate solution, drying at 60 °C for 10 minutes, and baking at 400 °C for 10 minutes was performed three times, the anode was baked at 800 °C for 1 hour to form a metal oxide layer having a coating weight of 492 g/m$^2$, to obtain the anode for water electrolysis of Example C5.

The coating weight of $LaNiO_3$ on the substrate was 5.0 g, the weight of 1 mole of LaNiO3 is 245.6 g, and 1.3 g of ammonium niobium oxalate aqueous solution having a Nb concentration of 261 mmol/kg solution was applied three times for a total of 3.9 g, resulting in a ratio of 0.05 moles of Nb to 1 mole of $LaNiO_3$.

(Example C6)

The procedure used for Example C1 was repeated except that the liquid A and the liquid B were prepared having the compositions of Example C6 in Table 7, and the cycle of application, drying, and baking was repeated 24 times. Then, further baking at 750 °C for 1 hour was performed to form a metal oxide layer having a coating weight of 486 g/m$^2$ on the substrate for coating, to obtain the anode for water electrolysis of Example C6.

(Example C7)

The coating solution of Example C7 was prepared by dissolving 18.61 g of $Ni(NO_3)_2 \cdot 6H_2O$, 69.28 g of $La(NO_3)_3 \cdot 6H_2O$, 60.06 g of glycine ($C_2H_5NO_2$), and 27.56 g of $Mn(NO_3)_2 \cdot 6H_2O$ in 400 g of pure water. The coating solution was transferred to a polyethylene container having a base of 13 cm $\times$ 13 cm and a height of 10 cm.

The substrate for coating was prepared in the same way as in Example C1. The substrate was completely immersed in the coating solution in the container and pulled up. After the entire surface of the substrate was coated with the coating solution, the substrate was turned sideways and excess coating solution was blown off by an air blowing treatment using an air gun.

The substrate was then dried at 60 °C for 10 minutes and further baked at 400 °C for 10 minutes to form a metal oxide layer on the substrate surface.

After repeating this cycle of coating, drying, and baking 25 times, the anode was further baked at 750 °C for 1 hour to form a metal oxide layer having a coating weight of 508 g/m$^2$ on the substrate for coating, to obtain the anode for water electrolysis of Example C7.

(Example C8)

37.22 g of $Ni(NO_3)_2 \cdot 6H_2O$, 69.28 g of $La(NO_3)_3 \cdot 6H_2O$ and 55.25 g of glycine were dissolved in 200 g of pure water to make the liquid A of Example C8. A $TiO_2$ sol having a primary particle size of 10 nm was diluted with pure water to prepare 200 g of $TiO_2$ sol having a Ti concentration of 160 mmol/kg sol, which was used as the liquid B of Example C8.

As in Example C1, the liquid A and the liquid B were mixed in a square polyethylene container to make the coating solution of Example C8.

The substrate for coating was prepared in the same way as in Example C1. The same method used for Example C1 was used to apply the coating solution to the substrate, and the cycle of coating, drying at 60 °C for 10 minutes, and baking at 400 °C for 10 minutes was repeated 26 times. Then, further baking at 750 °C for 1 hour was performed to form a metal oxide layer having a coating weight of 496 g/m$^2$ on the substrate for coating, to obtain the anode for water electrolysis of Example C8.

(Example C9)

The coating solution of Example C9 was prepared by dissolving 41.87 g of $Ni(NO_3)_2 \cdot 6H_2O$, 69.28 g of $La(NO_3)_3 \cdot 6H_2O$, 60.06 g of glycine, and 4.28 g of $ZrO(NO_3)_2 \cdot 2H_2O$ in 400 g of pure water. The coating solution was transferred to a polyethylene container having a base of 13 cm $\times$ 13 cm and a height of 10 cm.
The substrate for coating was prepared in the same way as in Example C1. The same method used for Example C7 was used to apply the coating solution to the substrate, and the cycle of coating, drying at 60 °C for 10 minutes, and baking at 400 °C for 10 minutes was repeated 28 times, followed by baking at 750 °C for 1 hour to form a metal oxide layer having a coating weight of 502 g/m$^2$ on the substrate for coating, to obtain the anode for water electrolysis of Example C9.

(Example C10)

53.50 g of $Ni(NO_3)_2 \cdot 6H_2O$, 69.28 g of $La(NO_3)_3 \cdot 6H_2O$ and 63.66 g of glycine were dissolved in 200 g of pure water to make the liquid A of Example C10. 2.87 g of $TaCl_5$ was dissolved in 200 g of pure water to make the liquid B of Example C10.
As in Example C1, the liquid A and the liquid B were mixed in a square polyethylene container to make the coating solution of Example C10.
The substrate for coating was prepared in the same way as in Example C1. The same method used for Example C1 was used to apply the coating solution to the substrate, and the cycle of coating, drying at 60 °C for 10 minutes, and baking at 400 °C for 10 minutes was repeated 25 times. Then, further baking at 750 °C for 1 hour was performed to form a metal oxide layer having a coating weight of 498 g/m$^2$ on the substrate for coating, to obtain the anode for water electrolysis of Example C10.

(Example C11)

34.89 g of $Ni(NO_3)_2 \cdot 6H_2O$, 69.28 g of $La(NO_3)_3 \cdot 6H_2O$, and 54.06 g of glycine were dissolved in 200 g of pure water to make the liquid A of Example C11. Antimony tartrate was dissolved in pure water to prepare 200 g of antimony tartrate solution having an Sb concentration of 40 mmol/kg solution, which was used as the liquid B of Example C11. The concentration of Sb was confirmed by inductively coupled plasma atomic emission spectrometry (ICP-AES).
As in Example C1, the liquid A and the liquid B were mixed in a square polyethylene container to make the coating solution of Example C11.
The substrate for coating was prepared in the same way as in Example C1. The same method used for Example C1 was used to apply the coating solution to the substrate, and the cycle of coating, drying at 60 °C for 10 minutes, and baking at 400 °C for 10 minutes was repeated 27 times. Then, further baking at 750 °C for 1 hour was performed to form a metal oxide layer having a coating weight of 504 g/m$^2$ on the substrate for coating, to obtain the anode for water electrolysis of Example C11.

(Comparative Example C1)

As a porous nickel substrate, a square of nickel expanded metal was prepared having a SW of 3.0 mm, a LW of 4.5 mm, a thickness of 1.2 mm, and an open fraction of 54 %. The nickel expanded metal was subjected to blasting treatment, then acid treatment in 6 N hydrochloric acid at 50 °C for 6 hours, then washed and dried to obtain the substrate for coating.
Next, a coating solution was prepared by mixing lanthanum acetate 1.5 hydrate and nickel nitrate hexahydrate to concentrations of 0.20 mol/L and 0.20 mol/L, respectively.
A vat containing the coating solution was disposed at the bottom of an EPDM coating roll, the coating roll was impregnated with the coating solution, a roll was disposed above so that the roll and the coating solution were always in contact, and a polyvinyl chloride (PVC) roller was disposed above to apply the coating solution to the substrate (roll method). The substrate was quickly passed between two EPDM sponge rolls before the coating solution dried. Then, after drying at 50 °C for 10 minutes, the metal oxide layer was formed on the substrate surface by baking at 400 °C for 10 minutes using a muffle furnace.
After repeating the cycle of roll coating, drying, and baking 75 times, the anode was further baked at 600 °C for 1 hour to form a metal oxide layer having a coating weight of 303 g/m$^2$, to obtain the anode for water electrolysis of Comparative Example C1.

(Comparative Example C2)

The substrate for coating was prepared in the same way as in Comparative Example C1.

Next, the coating solution was prepared with lanthanum nitrate hexahydrate, nickel nitrate hexahydrate, ammonium niobium oxalate n-hydrate, and glycine at concentrations of 0.20 mol/L, 0.16 mol/L, 0.04 mol/L, and 0.36 mol/L, respectively.

After repeating the cycle of roll coating, drying, and baking 40 times using the roll method used for Comparative Example C1, the anode was further baked at 700 °C for 1 hour to form a metal oxide layer having a coating weight of 145 g/m$^2$, to obtain the anode for water electrolysis of Comparative Example C2.

(Method of calculating sum of areas of pores more than 0.785 $\mu$m$^2$ and 20 $\mu$m$^2$ or less in area, average pore area, average number of pores, and porosity)

Small pieces of the prepared electrodes were embedded in epoxy resin, cross sections were prepared, and the cross sections were processed at an acceleration voltage of 6 kV using an argon broad ion beam (BIB) processing system ("E3500", manufactured by Hitachi High-Technologies Corporation). The cross section of each of the electrodes to be observed was parallel to the strand of the expanded metal and through the center of the strand.

The cross section was observed using an electron microscope ("S4800", manufactured by Hitachi High-Technologies Corporation) at an acceleration voltage of 5 kV and a magnification of 500×, and a cross-sectional photograph of the backscattered electron image using a yttrium aluminum garnet (YAG) detector was saved as a bitmap (BMP) file having a data size of 1,280 pixels × 960 pixels. The size of one pixel was 198.4375 nm.

Using image processing software "ImageJ", 20 $\mu$m × 20 $\mu$m regions were cropped from the cross-sectional photographs according to procedures 1) to 11) below, and in each extracted region, binarized extraction of the pores was performed and the areas of all pores were measured, then the sum of areas, average area, number, and porosity were calculated for pores having an area more than 0.785 $\mu$m$^2$ and 20 $\mu$m$^2$ or less. From each of the cross-sectional photographs, ten 20 $\mu$m × 20 $\mu$m regions were extracted so as not to overlap, and the average values for the sum of the areas, the average area, the number, and the porosity of pores having an area more than 0.785 $\mu$m$^2$ and 20 $\mu$m$^2$ or less obtained from the ten regions were calculated. The average values were used as the measurement results for the Examples and Comparative Examples of the sum of the areas, the average area, the number, and the porosity of pores having an area more than 0.785 $\mu$m$^2$ and 20 $\mu$m$^2$ or less.

The measurement results for Examples C1 to C6 and Comparative Examples C1 and C2 are listed in Table 8.

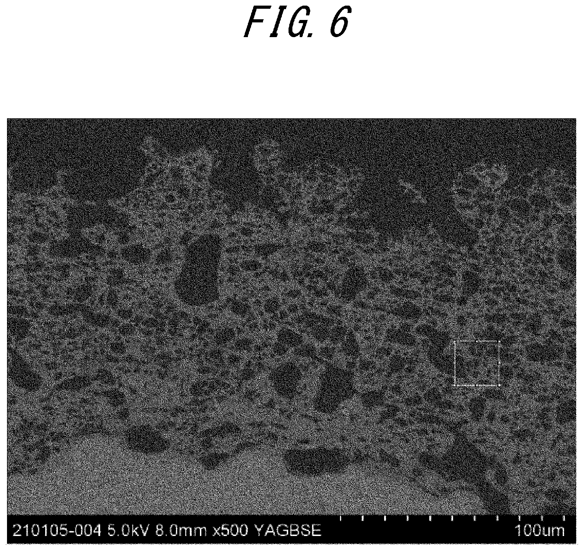

1) Open a BMP file of a cross-sectional photo and select 8-bit from the Type submenu in the Image menu. FIG. 6 illustrates an example of a cross-sectional photograph of an electrode.

2) In the Set scale submenu of the Analyze menu, set Distance in Pixels: 1, Known distance: 0.1984375, Pixel aspect ratio: 1.0, Unit of length: $\mu$m, and click OK.

3) Select the Specify command from the Selection submenu of the Edit menu, check the Scaled units ($\mu$m) checkbox, set Width: 20 and Height: 20, set the appropriate values for X coordinate and Y coordinate, and click OK to set the square region having 20 $\mu$m length sides to be processed from within the cross-sectional photograph. FIG. 6 illustrates an example of setting a square region having 20 $\mu$m sides to be cropped from a cross-sectional photograph. The square region having 20 $\mu$m sides on which the image processing is performed is preferably set so that the region does not include any outer surface or cracks leading to the outer surface.

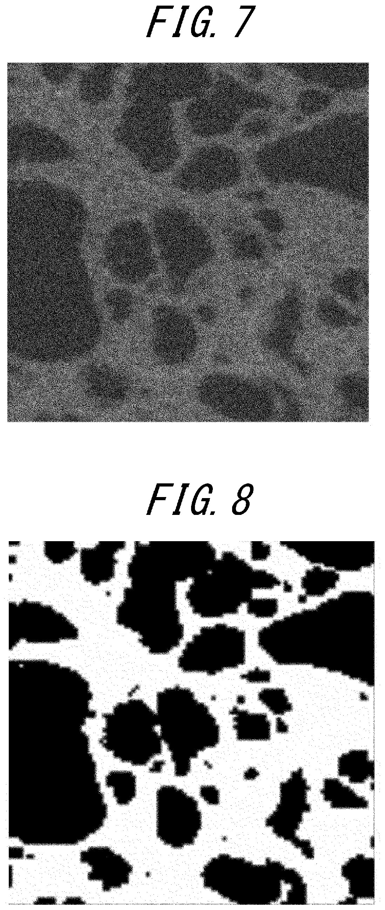

4) Execute the Crop command in the Image menu to crop out a square region having 20 $\mu$m sides from which the pores are to be extracted. FIG. 7 illustrates an example of an image of the square region having 20 $\mu$m sides cropped from FIG. 6.

5) Name and save the cropped square region having 20 $\mu$m sides.

6) In the Filters submenu of the Process menu, select Median... and set Radius: 0.5, then click OK to perform filter processing.

7) Select the Threshold command in the Adjust submenu of the Image menu, select Otsu as the automatic threshold setting method, select B&W as the display method, uncheck the Dark background checkbox, click the Auto button, and click the Apply button to perform binarized extraction of pores. FIG. 8 illustrates an example of a binarized extraction image of the pores from FIG. 7.

8) In the Analyze menu, select the Set Measurements... command in the Analyze menu and check the Area checkbox.

9) Select the Analyze Particles... command from the Analyze menu, set Size (Pixel^2): 0-Infinity, Circularity: 0.00-1.00, Show: Outlines, Check the Display results, Clear results, and Summarize checkbox, do not check the Exclude on Edges and Include Holes checkboxes, and click OK.

10) Count displayed in the Summary window is the number of pores (count), Average Size is the average pore area ($\mu$m$^2$), and %Area is the porosity (%).

11) The first column on the far left of the Results window displays the number of each pore, and the Area column shows the pore area ($\mu$m$^2$) of each pore. The number of each pore may be confirmed by the image in which the measured pore outlines are displayed and numbered in the "Image file name created by Drawing of 5)" window. Among the pore area values in the Area column, the sum of the areas of the pores having an area more than 0.785 $\mu$m$^2$ and 20 $\mu$m$^2$ or less is calculated by adding up all the areas that are more than 0.785 $\mu$m$^2$ and 20 $\mu$m$^2$ or less.

(Measurement of oxygen overvoltage in 55 wt% potassium hydroxide solution)

Oxygen overvoltage in 55 wt% potassium hydroxide solution was measured using the following procedure.

An electrode for evaluation was cut from each of the electrodes of the Examples and Comparative Examples to form a square shape 2 cm in length and 2 cm in width when viewed from the thickness direction, and fixed by a nickel screw to a nickel rod coated with PTFE. Platinum mesh was used as the counter electrode, electrolysis performed at 80 °C, in 55 wt% potassium hydroxide aqueous solution, at a current density of 6 kA/m$^2$, and the oxygen overvoltage measured. The current density was calculated using an electrode area of 2 cm $\times$ 2 cm = 4 cm$^2$. The oxygen overvoltage was measured by a three-electrode method using a Luggin capillary to eliminate the effect of ohmic loss due to liquid resistance. The distance between the tip of the Luggin capillary and the anode was fixed at 1 mm. A potentiostat galvanostat "1470E System", manufactured by Solartron Analytical, was used as a device for measuring the oxygen overvoltage. Silver/silver chloride (Ag/AgCl) was used as the reference electrode for the three-electrode method. Electrolyte resistance, which cannot be eliminated using the three-electrode method, was measured using the AC impedance method, and the oxygen overvoltage described above was corrected based on the measured electrolyte resistance.

Electrolyte resistance and double layer capacitance were calculated by obtaining a Cole-Cole plot with real and imaginary parts, using a frequency response analyzer "1255B", manufactured by Solartron Analytical, followed by analysis by equivalent circuit fitting. Double layer capacitance was calculated using an electrode area of 2 cm $\times$ 2 cm = 4 cm$^2$.

Ohmic loss that could not be eliminated using the three-electrode method was measured using the AC impedance method, and the oxygen overvoltage described above was corrected based on the measured value of ohmic loss. The frequency response analyzer "1255B", manufactured by Solartron Analytical, was used to measure ohmic loss.

The evaluation results for Examples C1 to C6 and Comparative Examples C1 and C2 are listed in Table 8.

(Method of measuring initial double layer capacitance of electrode)

The double layer capacitance was measured by the same method used for Example A and Comparative Example A, described above.

The evaluation results for Examples C1 to C6 and Comparative Examples C1 and C2 are listed in Table 8.

(Method of calculating combustion byproduct gases/LaNi$_x$M$_y$O$_{3-z}$ molar ratio)

The combustion byproduct gases/LaNi$_x$M$_y$O$_{3-z}$ molar ratio was calculated by the same method as used for Example A and Comparative Example A above.

The measurement results for Examples C1 to C6 and Comparative Examples C1 and C2 are listed in Table 8.

(Example C7)

An electrolytic cell for alkaline water electrolysis and a bipolar electrolyzer was fabricated as follows.

-Anode-

The anode was prepared by the same method as for Example C4.

-Cathode-

As an electrically conductive substrate, platinum supported on a plain weave mesh substrate made of size 40 mesh of woven fine nickel wire having a diameter of 0.15 mm was used.

-Partition wall, outer frame-

A bipolar element including a partition wall that separates the anode from the cathode and an outer frame that surrounds the partition wall was used. Nickel was used as the material of all components in contact with the electrolyte, such as the partition walls and the frames of the bipolar elements.

-Electrically conductive elastic body-

The electrically conductive elastic body was made of woven nickel wire having a wire diameter of 0.15 mm and corrugated to a wave height of 5 mm.

-Membrane-

Zirconium oxide (product name "EP Zirconium Oxide", manufactured by Daiichi Kigenso Kagaku Kogyo Co., Ltd.), N-methyl-2-pyrrolidone (manufactured by Wako Pure Chemical Industries Ltd.), polysulfone (Udel®, manufactured by Solvay Co., Ltd.), and polyvinylpyrrolidone (weight average molecular weight (Mw) 900,000, manufactured by Wako Pure Chemical Industries, Ltd.) were used to obtain a coating solution having the following composition.

Polysulfone: 15 mass parts
Polyvinylpyrrolidone: 6 mass parts
N-methyl-2-pyrrolidone: 70 mass parts
Zirconium oxide: 45 mass parts

The above coating solution was applied to both surfaces of the substrate, which was polyphenylene sulfide mesh (280 $\mu$m film thickness, 358 $\mu$m gap, 150 $\mu$m fiber diameter, manufactured by Clever Co., Ltd.). Immediately after coating, the substrate coated with the coating solution was exposed to steam and then immersed in a solidifying bath to form a coating film on the substrate surface. The coating film was then thoroughly washed with pure water to obtain a porous membrane.

-Gasket-

A gasket was used that had a thickness of 4.0 mm, a width of 18 mm, and formed a square shape that had internal dimensions of 504 mm by 504 mm. In plan view, the gasket formed an internal opening that had the same dimensions as the electrode chamber, and the gasket had a slit structure to hold the membrane by insertion.

-Zero-gap bipolar element-

The external-header zero-gap cell unit 60 was rectangular, 540 mm × 620 mm, and the area of the energized surface of the anode 2a and the cathode 2c was 500 mm × 500 mm. The cathode side of the 60 zero-gap bipolar element includes the cathode chamber 5c, through which the electrolyte flowed, and in which the cathode 2c, the electrically conductive elastic body 2e, and a cathode collector 2r were stacked and connected to the partition wall 1 via the cathode ribs 6. On the anode side was the anode chamber 5a, through which the electrolyte flowed, and in which the anode 2a was connected to the partition wall 1 via the anode ribs 6 (FIG. 2).

The depth of the anode chamber 5a (anode chamber depth, distance between the partition wall and the anode in FIG. 2) was 25 mm, the depth of the cathode chamber 5c (cathode chamber depth, distance between the partition wall and the cathode collector in FIG. 2) was 25 mm, and the material was nickel. The thickness of the partition wall 1 made of nickel was 2 mm, with the anode ribs 6 made of nickel and 25 mm high and 1.5 mm thick and the cathode ribs 6 made of nickel and 25 mm high and 1.5 mm thick attached by welding.

A nickel expanded substrate that had already undergone blasting treatment was used as the cathode current collector 2r. The thickness of the substrate was 1 mm and the open fraction was 54 %. The electrically conductive elastic body 2e was fixed by spot welding on the cathode collector 2r. By stacking these zero-gap bipolar elements via the gasket holding the membrane, the zero-gap structure Z could be formed in which the anode 2a and the cathode 2c were pressed against the membrane 4.

(Comparative Example C3)

A zero-gap bipolar element was produced in the same way as in Example C7, except that the anode made in the same way as in Comparative Example C2 was used.

Water electrolysis was performed using the electrolysis apparatus for Example C7 and Comparative Example C3 by keeping the electrolyte of 55 wt% potassium hydroxide solution at 80 °C and circulating while positive current was continuously applied for 100 hours to achieve a current density of 6 kA/m$^2$. The pair voltages of each cell of Example C7 and Comparative Example C3 were monitored and the pair voltage trends were recorded. The cell voltage of each cell was compared by taking the average of three cells of each of Example C7 and Comparative Example C3.

For Example C7, the three cell average overvoltage was as low as 1.70 V after 100 hours of energizing, while for Comparative Example C3, the three cell average overvoltage was as high as 1.90 V after 100 hours of energizing. Therefore, it can be concluded that the anode of Example C7 exhibits a lower oxygen overvoltage with a high alkali concentration electrolyte than that of Comparative Example C3, resulting in a lower cell voltage even during extended operation.

[Table 7]

| | Composition | Liquid A | | | | Liquid B | |
|---|---|---|---|---|---|---|---|
| | | Ni(NO3)2·6H2O (g) | La(NO)3.6H2O (g) | Glycine (g) | Deionized water (g) | Nb concentration in ammonium niobium oxalate aqueous solution (mmol/kg solution) | Weight of ammonium niobium oxalate aqueous solution (g) |
| Example C1 | LaNi0.8Nb0.2O3.2 | 27.91 | 51.96 | 41.44 | 200 | 120 | 200 |
| Example C2 | LaNi0.85Nb0.15O3.15 | 34.60 | 60.62 | 49.40 | 200 | 105 | 200 |
| Example C3 | LaNi0.795Nb0.005O2.705 | 36.98 | 69.28 | 55.13 | 200 | 4 | 200 |
| Example C6 | LaNi1.1NB0.1O3.4 | 51.17 | 69.28 | 62.46 | 200 | 80 | 200 |

[Table 8]

| | Composition | Heteroelement M substitution amount y (LaNixMyO3-z) | x+y | z | Number of applications (Times) | Coating weight (g/m2) | Coating weight one time (g/m2) | Molar ratio (Combustion byproduct gases / LaNixMyO3-z) | Sum of areas of pores having area more than 0.785 $\mu$m2 and 20 $\mu$m2 or less ($\mu$m2) | Average pore area ($\mu$m2) | Average number of pores (Count) | Porosity (%) | Oxygen overvoltage in 55 wt% potassium hydroxide aqueous solution (mV) | Initial double layer capacitance (F/cm$^2$) |
|---|---|---|---|---|---|---|---|---|---|---|---|---|---|---|
| Example C1 | LaNi0.8Nb0.2O3.2 | 0.2 | 1 | -0.2 | 50 | 503 | 10.1 | 26.6 | 12 | 0.79 | 145 | 29 | 209 | 0.78 |
| Example C2 | LaNi0.85Nb0.15O3.15 | 0.15 | 1 | -0.15 | 33 | 496 | 15.0 | 26.8 | 30 | 32 | 51 | 41 | 174 | 2.8 |
| Example C3 | LaNi0.795Nb0.005O2.705 | 0.005 | 0.8 | 0.295 | 25 | 498 | 19.9 | 25.3 | 159 | 6.8 | 29 | 50 | 192 | 20 |
| Example C4 | LaNiNb0.01O3.025 | 0.01 | 1.01 | -0.025 | 49 | 512 | 10.4 | 27.5 | 21 | 1.2 | 140 | 42 | 183 | 2.8 |
| Example C5 | LaNiNb0.05O3.125 | 0.05 | 1.05 | -0.125 | 32 | 492 | 15.4 | 27.5 | 130 | 4.5 | 40 | 45 | 165 | 1.6 |
| Example C6 | LaNi1.1Nb0.1O3.4 | 0.1 | 1.2 | -0.4 | 24 | 486 | 20.3 | 29.3 | 198 | 9.8 | 22 | 55 | 198 | 32 |
| Example C7 | LaNi0.4Mn0.6O3 | 0.6 | 1 | 0 | 25 | 508 | 20.3 | 27.5 | 128 | 4.8 | 27 | 41 | 221 | 1.8 |
| Example C8 | LaNi0.8Ti0.2O3.1 | 0.2 | 1 | -0.1 | 26 | 496 | 19.1 | 25.3 | 156 | 6.4 | 24 | 48 | 232 | 22 |
| Example C9 | LaNi0.9Zr0.1O3.05 | 0.1 | 1 | -0.05 | 28 | 502 | 17.9 | 27.5 | 132 | 4.3 | 31 | 42 | 228 | 2.5 |
| Example C10 | LaNi1.15Ta0.05O3.35 | 0.05 | 1.2 | -0.35 | 25 | 498 | 19.9 | 29.2 | 187 | 9.5 | 21 | 53 | 225 | 2.7 |
| Example C11 | LaNi0.75Sb0.05O2.75 | 0.05 | 0.8 | 0.25 | 27 | 504 | 18.7 | 25.0 | 143 | 5.4 | 26 | 46 | 229 | 2.3 |
| Comparative Example C1 | LaNiO$_3$ | 0 | 1 | 0 | 75 | 303 | 4.0 | 11.5 | 2 | 0.52 | 192 | 25 | 300 | 2.4 |

40

(continued)

| Composition | Heteroelement M substitution amount y (LaNixMyO3-z) | x+y | z | Number of applications (Times) | Coating weight (g/m2) | Coating weight one time (g/m2) | Molar ratio (Combustion byproduct gases / LaNixMyO3-z) | Sum of areas of pores having area more than 0.785 μm2 and 20 μm2 or less (μm2) | Average pore area (μm2) | Average number of pores (Count) | Porosity (%) | Oxygen overvoltage in 55 wt% potassium hydroxide aqueous solution (mV) | Initial double layer capacitance (F/cm2) |
|---|---|---|---|---|---|---|---|---|---|---|---|---|---|
| Comparative Example C2 LaNi0.8Nb0.2O3.2 | 0.2 | 1 | -0.2 | 40 | 145 | 3.6 | 12.6 | 7 | 0.59 | 156 | 23 | 260 | 0.2 |

(Example D1)

As a porous nickel substrate, a square of nickel expanded metal was prepared having a SW of 3.0 mm, a LW of 4.5 mm, a thickness of 1.2 mm, and an open fraction of 54 %. The nickel expanded metal was subjected to blasting treatment, then a substrate having a length of 10 cm and a width of 10 cm was cut out, acid treated in 6 N hydrochloric acid at 50 °C for 6 hours, washed, and dried to obtain the substrate for coating.
The coating solution of Example D1 was prepared by dissolving 186.1 g of $Ni(NO_3)_2 \cdot 6H_2O$, 692.8 g of $La(NO_3)_3 \cdot 6H_2O$, 90.08 g of glycine ($C_2H_5NO_2$) and 275.6 g of $Mn(NO_3)_2 \cdot 6H_2O$ in 400 g of pure water.
Using a spray coating device (rCoater®, sold by Asahi Sunac Corporation), the coating solution of Example D1 was applied to both sides of the substrate, dried at 60 °C for 10 minutes, and then baked at 400 °C for 10 minutes to form a metal oxide layer on the substrate surface.
The cycle of coating solution application, drying, and baking was repeated 20 times, then further baked at 700 °C for 1 hour to form a metal oxide layer having a coating weight of 1,001 g/m$^2$, to obtain the electrode of Example D1.

(Example D2)

372.2 g of $Ni(NO_3)_2 \cdot 6H_2O$, 692.8 g of $La(NO_3)_3 \cdot 6H_2O$, 99.45 g of glycine, and 200 g of $TiO_2$ sol having a Ti concentration of 1.6 mol/kg sol were mixed in 200 g of pure water, and a T18 digital ULTRA-TURRAX® (ULTRA-TURRAX is a registered trademark in Japan, other countries, or both) homogenizer (with S18N-19G shaft generator), sold by IKA Japan K.K., was used to disperse the suspension to obtain the coating solution of Example D2.
As in Example D1, the coating solution of Example D2 was applied to both sides of the substrate, dried at 60 °C for 10 minutes, and then baked at 400 °C for 10 minutes to form a metal oxide layer on the substrate surface.
The cycle of coating solution application, drying, and baking was repeated 15 times, then further baked at 700 °C for 1 hour to form a metal oxide layer having a coating weight of 752 g/m$^2$, to obtain the electrode of Example D2.

(Example D3)

The coating solution of Example D3 was prepared by dissolving 418.7 g of $Ni(NO_3)_2 \cdot 6H_2O$, 692.8 g of $La(NO_3)_3 \cdot 6H_2O$, 102.1 g of glycine and 42.76 g of $ZrO(NO_3)_2 \cdot 2H_2O$ in 400 g of pure water.
As in Example D1, the coating solution of Example D3 was applied to both sides of the substrate, dried at 60 °C for 10 minutes, and then baked at 400 °C for 10 minutes to form a metal oxide layer on the substrate surface.
The cycle of coating solution application, drying, and baking was repeated 30 times, then further baked at 700 °C for 1 hour to form a metal oxide layer having a coating weight of 1,505 g/m$^2$, to obtain the electrode of Example D3.

(Example D4)

535.0 g of $Ni(NO_3)_2 \cdot 6H_2O$, 692.8 g of $La(NO_3)_3 \cdot 6H_2O$, 70.03 g of glycine, and 28.66 g of $TaCl_5$ were mixed in 400 g of pure water, and a T18 digital ULTRA-TURRAX® homogenizer (with S18N-19G shaft generator), sold by IKA Japan K.K., was used to disperse the suspension to obtain the coating solution of Example D4.
As in Example D1, the coating solution of Example D4 was applied to both sides of the substrate, dried at 60 °C for 10 minutes, and then baked at 400 °C for 10 minutes to form a metal oxide layer on the substrate surface.
The cycle of coating solution application, drying, and baking was repeated 40 times, then further baked at 700 °C for 1 hour to form a metal oxide layer having a coating weight of 2,006 g/m$^2$, to obtain the electrode of Example D4.

(Example D5)

As a porous nickel substrate, a square of nickel expanded metal was prepared having a SW of 3.0 mm, a LW of 4.5 mm, a thickness of 1.2 mm, and an open fraction of 54 %. The nickel expanded metal was subjected to blasting treatment, then a substrate having a length of 10 cm and a width of 10 cm was cut out, acid treated in 6 N hydrochloric acid at 50 °C for 6 hours, washed, and dried to obtain the substrate for coating.
39.54 g of $Ni(NO_3)_2 \cdot 6H_2O$, 69.28 g of $La(NO_3)_3 \cdot 6H_2O$ and 10.81 g of glycine were dissolved in 200 g of pure water to make the liquid A of Example D5. Antimony tartrate was dissolved in pure water to prepare antimony tartrate solution having an Sb concentration of 40 mmol/kg solution, which was used as the liquid B of Example D5. The concentration of Sb was confirmed by inductively coupled plasma atomic emission spectrometry (ICP-AES).
The liquid A was placed in a square polyethylene container having a base of 6 cm × 10 cm and a height of 11 cm, and the liquid B was mixed slowly while stirring with a magnetic stirrer to make the coating solution for Example D5.
While stirring the coating solution, the substrate for coating was turned vertically and the bottom half was immersed in the coating solution, then the substrate turned upside down and the top half also immersed in the coating solution. After coating, the substrate was turned sideways and excess coating solution was blown off by an air blowing treatment using an air gun.

The substrate was then dried at 60 °C for 10 minutes and further baked at 400 °C for 10 minutes to form a metal oxide layer on the substrate surface.

After repeating this cycle of coating, drying, and baking 50 times, the electrode was further baked at 700 °C for 1 hour to form a metal oxide layer having a coating weight of 503 g/m$^2$ on the substrate for coating, to obtain the electrode of Example D5 .

(Example D6)

488.5 g of Ni(NO$_3$)$_2$·6H$_2$O, 692.8 g of La(NO$_3$)$_3$·6H$_2$O, 70.03 g of glycine, and 235.3 g of ammonium niobium oxalate aqueous solution having a Nb concentration of 0.34 mol/kg solution were mixed in 164.7 g of pure water, and a digital ULTRA-TURRAX® homogenizer (with S18N-19G shaft generator), sold by IKA Japan K.K., was used to disperse the suspension to obtain the coating solution of Example D6.

As in Example D1, the coating solution of Example D6 was applied to both sides of the substrate, dried at 60 °C for 10 minutes, and then baked at 400 °C for 10 minutes to form a metal oxide layer on the substrate surface.

The cycle of coating solution application, drying, and baking was repeated 20 times, then further baked at 700 °C for 1 hour to form a metal oxide layer having a coating weight of 1,004 g/m$^2$, to obtain the electrode of Example D6.

(Example D7)

The cycle of coating solution application, drying, and baking was repeated 30 times, and other processing was performed in the same way as in Example D6 to form a metal oxide layer having a coating weight of 1,507 g/m$^2$, to obtain the electrode of Example D7.

(Example D8)

The cycle of coating solution application, drying, and baking was repeated 40 times, and other processing was performed in the same way as in Example D6 to form a metal oxide layer having a coating weight of 2,009 g/m$^2$, to obtain the electrode of Example D8.

(Example D9)

465.2 g of Ni(NO$_3$)$_2$·6H$_2$O, 692.8 g of La(NO$_3$)$_3$·6H$_2$O, 90.08 g of glycine, and 94.12 g of ammonium niobium oxalate aqueous solution having a Nb concentration of 0.34 mol/kg solution were mixed in 305.9 g of pure water and a digital ULTRA-TURRAX® homogenizer (with S18N-19G shaft generator), sold by IKA Japan K.K., was used to disperse the suspension to obtain the coating solution of Example D9.

As in Example D1, the coating solution of Example D9 was applied to both sides of the substrate, dried at 60 °C for 10 minutes, and then baked at 400 °C for 10 minutes to form a metal oxide layer on the substrate surface.

The cycle of coating solution application, drying, and baking was repeated 20 times, then further baked at 700 °C for 1 hour to form a metal oxide layer having a coating weight of 1,005 g/m$^2$, to obtain the electrode of Example D9.

(Example D10)

The cycle of coating solution application, drying, and baking was repeated 50 times, and other processing was performed in the same way as in Example D9 to form a metal oxide layer having a coating weight of 2,500 g/m$^2$, to obtain the electrode of Example D10.

(Example D11)

The cycle of coating solution application, drying, and baking was repeated 60 times, and other processing was performed in the same way as in Example D9 to form a metal oxide layer having a coating weight of 3,000 g/m$^2$, to obtain the electrode of Example D11.

(Example D12)

As a porous nickel substrate, a square of nickel expanded metal was prepared having a SW of 3.0 mm, a LW of 4.5 mm, a thickness of 1.2 mm, and an open fraction of 54 %. The nickel expanded metal was subjected to blasting treatment, then a substrate having a length of 10 cm and a width of 10 cm was cut out, acid treated in 6 N hydrochloric acid at 50 °C for 6 hours, washed, and dried to obtain the substrate for coating.

26.75 g of $Ni(NO_3)_2 \cdot 6H_2O$, 34.64 g of $La(NO_3)_3 \cdot 6H_2O$, and 3.99 g of aspartic acid were dissolved in 200 g of pure water and transferred to a square polyethylene container having a base of 6 cm $\times$ 10 cm and a height of 11 cm, which was used as the liquid A of Example D12.

Ammonium niobium oxalate was dissolved in pure water to prepare 200 g of aqueous solution of ammonium niobium oxalate having a Nb concentration of 20 mmol/kg solution, which was used as the liquid B of Example D12. The concentration of Nb was confirmed by inductively coupled plasma atomic emission spectrometry (ICP-AES).

The liquid A of Example D12 was slowly mixed with the liquid B of Example D12 while stirring with a magnetic stirrer to make the coating solution of Example D12.

While stirring the coating solution, the substrate for coating was turned vertically and the lower half of the substrate was slowly dipped into the coating solution and held for 5 seconds. The substrate was then pulled up, turned upside down, and the top half of the substrate also slowly dipped into the coating solution and held for 5 seconds. After coating the entire surface of the substrate with the coating solution, the substrate was turned sideways and excess coating solution was blown off by an air blowing treatment using an air gun. The substrate was then dried at 60 °C for 10 minutes and further baked at 400 °C for 10 minutes to form a metal oxide layer on the substrate surface.

This cycle of coating, drying, and baking was repeated 60 times. Then, further baking at 700 °C for 1 hour was performed to form a metal oxide layer having a coating weight of 505 g/m$^2$ on the substrate for coating, to obtain the electrode of Example D12.

(Method of measuring oxygen overvoltage and double layer capacitance of electrode initially and after 500 hours of energization)

The oxygen overvoltage and the double layer capacitance of the electrode were measured initially and after 500 hours of energization by the same method used for Example A and Comparative Example A, described above.

The evaluation results of Examples D1 to D12 are listed in Table 9.

(Method of measuring number of moles of La per cm$^2$ of electrode after 500 hours of energization)

The number of moles of La per cm$^2$ of electrode after 500 hours of energization was measured by the same method used for Example A and Comparative Example A, described above.

The evaluation results of Examples D1 to D12 are listed in Table 9.

(Method of calculating capacitance per mmol of La of electrode after 500 hours of energization)

The capacitance per mmol of La of the electrode after 500 hours of energization was measured by the same method used for Example A and Comparative Example A, described above.

The evaluation results of Examples D1 to D12 are listed in Table 9.

(Method of calculating combustion byproduct gases/$LaNi_xM_yO_{3-z}$ molar ratio)

The combustion byproduct gases/$LaNi_xM_yO_{3-z}$ molar ratio was calculated by the same method as used for Example A and Comparative Example A above.

The evaluation results of Examples D1 to D12 are listed in Table 9.

(Example D13)

An electrolytic cell for alkaline water electrolysis and a bipolar electrolyzer was fabricated as follows.

-Anode-

The anode was prepared by the same method used for Example D10.

-Cathode-

As an electrically conductive substrate, platinum supported on a plain weave mesh substrate made of size 40 mesh of woven fine nickel wire having a diameter of 0.15 mm was used.

-Partition wall, outer frame-

A bipolar element including a partition wall that separates the anode from the cathode and an outer frame that surrounds the partition wall was used. Nickel was used as the material of all components in contact with the electrolyte, such as the partition walls and the frames of the bipolar elements.

-Electrically conductive elastic body-

The electrically conductive elastic body was made of woven nickel wire having a wire diameter of 0.15 mm and corrugated to a wave height of 5 mm.

-Membrane-

Zirconium oxide (product name "EP Zirconium Oxide", manufactured by Daiichi Kigenso Kagaku Kogyo Co., Ltd.), N-methyl-2-pyrrolidone (manufactured by Wako Pure Chemical Industries Ltd.), polysulfone (Udel®, manufactured by Solvay Co., Ltd.), and polyvinylpyrrolidone (weight average molecular weight (Mw) 900,000, manufactured by Wako Pure Chemical Industries, Ltd.) were used to obtain a coating solution having the following composition.

> Polysulfone: 15 mass parts
> Polyvinylpyrrolidone: 6 mass parts
> N-methyl-2-pyrrolidone: 70 mass parts
> Zirconium oxide: 45 mass parts

The above coating solution was applied to both surfaces of the substrate, which was polyphenylene sulfide mesh (280 μm film thickness, 358 μm gap, 150 μm fiber diameter, manufactured by Clever Co., Ltd.). Immediately after coating, the substrate coated with the coating solution was exposed to steam and then immersed in a solidifying bath to form a coating film on the substrate surface. The coating film was then thoroughly washed with pure water to obtain a porous membrane.

-Gasket-

A gasket was used that had a thickness of 4.0 mm, a width of 18 mm, and formed a square shape that had internal dimensions of 504 mm by 504 mm. In plan view, the gasket formed an internal opening that had the same dimensions as the electrode chamber, and the gasket had a slit structure to hold the membrane by insertion.

-Zero-gap bipolar element-

The external-header zero-gap cell unit 60 was rectangular, 540 mm × 620 mm, and the area of the energized surface of the anode 2a and the cathode 2c was 500 mm × 500 mm. The cathode side of the 60 zero-gap bipolar element includes the cathode chamber 5c, through which the electrolyte flowed, and in which the cathode 2c, the electrically conductive elastic body 2e, and a cathode collector 2r were stacked and connected to the partition wall 1 via the cathode ribs 6. On the anode side was the anode chamber 5a, through which the electrolyte flowed, and in which the anode 2a was connected to the partition wall 1 via the anode ribs 6 (FIG. 2).

The depth of the anode chamber 5a (anode chamber depth, distance between the partition wall and the anode in FIG. 2) was 25 mm, the depth of the cathode chamber 5c (cathode chamber depth, distance between the partition wall and the cathode collector in FIG. 2) was 25 mm, and the material was nickel. The thickness of the partition wall 1 made of nickel was 2 mm, with the anode ribs 6 made of nickel and 25 mm high and 1.5 mm thick and the cathode ribs 6 made of nickel and 25 mm high and 1.5 mm thick attached by welding.

A nickel expanded substrate that had already undergone blasting treatment was used as the cathode current collector 2r. The thickness of the substrate was 1 mm and the open fraction was 54 %. The electrically conductive elastic body 2e was fixed by spot welding on the cathode collector 2r. By stacking these zero-gap bipolar elements via the gasket holding the membrane, the zero-gap structure Z could be formed in which the anode 2a and the cathode 2c were pressed against the membrane 4.

Water electrolysis was performed using the electrolysis apparatus of Example D13 above, with the electrolyte temperature at 80 °C and the current density at 6 kA/m² for 500 hours of continuous positive current flow. The pair voltage of each cell of Example D13 was monitored and the pair voltage trends were recorded. The cell voltage of each cell was compared by taking the average of three cells of Example D13.

Example D13 had a low three cell average overvoltage of 1.71 V after 500 hours of energization. Therefore, it can be concluded that the anode of Example D10 was able to achieve a low cell voltage even during extended operation.

[Table 9]

| | Composition | Heteroelement M substitution amount y ($LaNi_xM_yO_{3-z}$) | x+y | z | Coating weight (g/m²) | Baking conditions | Molar ratio (Combustion byproduct gases / $LaNi_xM_yO_{3-z}$) | Initial | | After 500 hours of energization | | | |
|---|---|---|---|---|---|---|---|---|---|---|---|---|---|
| | | | | | | | | Double layer capacitance (F/cm²) | Overvoltage (mV) | Double layer capacitance (F/cm²) | Overvoltage (mV) | La moles per unit area (mmol/cm²) | Capacitance per mmol of La (F/mmol$_{La}$) |
| Example D1 | LaNi0.4Mn0.6O3 | 0.6 | 1 | 0 | 1001 | 700 °C 1 h | 6.3 | 2.5 | 222 | 3.0 | 217 | 0.37 | 8.1 |
| Example D2 | LaNi0.8Ti0.2O3.1 | 0.2 | 1 | -0.1 | 752 | 700 °C 1 h | 6.4 | 1.7 | 232 | 2.3 | 223 | 0.28 | 8.3 |
| Example D3 | LaNi0.9Zr0.1O3.05 | 0.1 | 1 | -0.05 | 1505 | 700 °C 1 h | 6.8 | 3.0 | 217 | 3.5 | 213 | 0.54 | 6.4 |
| Example D4 | LaNi1.15Ta0.05O3.35 | 0.05 | 1.2 | -0.35 | 2006 | 700 °C 1 h | 5.6 | 3.5 | 213 | 3.9 | 210 | 0.67 | 5.8 |
| Example D5 | LaNi0.85Sb0.05O2.9 | 0.05 | 0.9 | 0.1 | 503 | 700 °C 1 h | 7.3 | 1.7 | 233 | 2.5 | 222 | 0.19 | 12.9 |
| Example D6 | LaNi1.05Nb0.05O3.2 | 0.05 | 1.1 | -0.2 | 1004 | 700 °C 1 h | 5.7 | 5.0 | 200 | 5.4 | 197 | 0.34 | 16.0 |
| Example D7 | LaNi1.05Nb0.05O3.2 | 0.05 | 1.1 | -0.2 | 1507 | 700 °C 1 h | 5.7 | 6.0 | 192 | 6.2 | 191 | 0.51 | 12.2 |
| Example D8 | LaNi1.05Nb0.05O3.2 | 0.05 | 1.1 | -0.2 | 2009 | 700 °C 1 h | 5.7 | 6.5 | 188 | 6.6 | 187 | 0.68 | 9.7 |
| Example D9 | LaNiNb0.02O3.075 | 0.02 | 1.02 | -0.05 | 1005 | 700 °C 1 h | 6.4 | 4.0 | 209 | 4.8 | 202 | 0.36 | 13.2 |
| Example D10 | LaNiNb0.02O3.075 | 0.02 | 1.02 | -0.05 | 2500 | 700 °C 1 h | 6.4 | 6.5 | 186 | 6.7 | 186 | 0.91 | 7.8 |
| Example D11 | LaNiNb0.02O3.075 | 0.02 | 1.02 | -0.05 | 3000 | 700 °C 1 h | 6.4 | 7.0 | 181 | 7.1 | 176 | 1.1 | 6.5 |
| Example D12 | LaNi1.15Nb0.05O3.5 | 0.05 | 1.2 | -0.5 | 505 | 700 °C 1 h | 6.0 | 2.1 | 228 | 2.7 | 220 | 0.17 | 15.9 |

EP 4 317 054 A1

46

INDUSTRIAL APPLICABILITY

The electrode according to the present disclosure has a high initial double layer capacitance, resulting in low oxygen overvoltage after long-term energization, making the electrode suitable for use as an anode in a water electrolyzer in the electrolysis of water containing alkali.

REFERENCE SIGNS LIST

| | |
|---|---|
| 1 | partition wall |
| 2 | electrode |
| 2a | anode |
| 2c | cathode |
| 2e | electrically conductive elastic body |
| 2r | cathode current collector |
| 3 | outer frame |
| 4 | membrane |
| 5a | anode chamber |
| 5c | cathode chamber |
| 6 | rib |
| 7 | gasket |
| 50 | bipolar electrolyzer |
| 51g | fast head, loose head |
| 51i | insulating plate |
| 51a | anode terminal element |
| 51c | cathode terminal element |
| 51r | tie rod |
| 60 | bipolar element |
| 65 | electrolytic cell |
| 70 | electrolysis apparatus |
| 71 | tubing pump |
| 72 | gas-liquid separation tank |
| 74 | rectifier |
| 75 | oxygen meter |
| 76 | hydrogen meter |
| 77 | flow meter |
| 78 | pressure gauge |
| 79 | heat exchanger |
| 80 | pressure control valve |
| Z | zero-gap structure |

**Claims**

1. An electrode comprising $LaNi_xM_yO_{3-z}$ on a substrate, and having an initial double layer capacitance of more than 0.6 $F/cm^2$, where $x + y$ is 0.8 or more and 1.2 or less, y is 0.001 or more and 0.6 or less, z is -0.5 or more and 0.5 or less, and M includes at least one of Nb, Ta, Sb, Ti, Mn, and Zr.

2. The electrode according to claim 1, wherein the number of moles of La per $cm^2$ is 0.06 mmol or more and 1.1 mmol or less.

3. The electrode according to claim 1 or 2, wherein the capacitance per mmol of La is 10 F or more and 25 F or less.

4. The electrode according to any one of claims 1 to 3, wherein the coating weight of the $LaNi_xM_yO_{3-z}$ is more than 145 $g/m^2$ and 3,500 $g/m^2$ or less.

5. The electrode according to any one of claims 1 to 4, wherein the main peak position 20 of XRD of the $LaNi_xM_yO_{3-z}$

is 32.6° or more and 33.2° or less.

6. The electrode according to any one of claims 1 to 5, wherein y in the $LaNi_xM_yO_{3-z}$ is 0.002 or more and less than 0.2.

7. The electrode according to any one of claims 1 to 6, wherein the main peak position 20 of XRD of the $LaNi_xM_yO_{3-z}$ is 32.7° or more and 33.2° or less.

8. The electrode according to any one of claims 1 to 7, wherein M in the $LaNi_xM_yO_{3-z}$ is Nb.

9. The electrode according to any one of claims 1 to 8, wherein, in a square region of the $LaNi_xM_yO_{3-z}$ layer having 20 $\mu$m sides, a sum of areas of pores having an area of more than 0.785 $\mu m^2$ and 20 $\mu m^2$ or less is 10 $\mu m^2$ or more and 200 $\mu m^2$ or less.

10. The electrode according to any one of claims 1 to 9, wherein, in a square region of the $LaNi_xM_yO_{3-z}$ layer having 20 $\mu$m sides, the average pore area is more than 0.785 $\mu m^2$ and 10 $\mu m^2$ or less.

11. The electrode according to any one of claims 1 to 10, wherein, in a square region of the $LaNi_xM_yO_{3-z}$ layer having 20 $\mu$m sides, the average number of pores is 20 or more and 150 or less.

12. An electrolytic cell comprising the electrode according to any one of claims 1 to 11 as an anode.

13. A method for producing hydrogen, comprising inputting a variable electrical power source to the electrolytic cell according to claim 12.

14. A method for producing hydrogen comprising: water electrolysis of water containing an alkali by an electrolyzer; and producing hydrogen, the electrolyzer comprising at least an anode and a cathode, the anode comprising $LaNi_xM_yO_{3-z}$ on a substrate, and having an initial double layer capacitance of more than 0.6 $F/cm^2$, where x + y is 0.8 or more and 1.2 or less, y is 0.001 or more and 0.6 or less, z is -0.5 or more and 0.5 or less, and M includes at least one of Nb, Ta, Sb, Ti, Mn, and Zr.

15. A method for preparing the electrode according to any one of claims 1 to 11, comprising a process of baking a mixture of $La(NO_3)_3$, $Ni(NO_3)_2$, and a compound comprising C, H, N, and O having a carboxyl group and an amino group, wherein a molar ratio of combustion byproduct gases $CO_2$, $H_2O$, and $N_2$ generated by the baking to the $LaNi_xM_yO_{3-z}$ (combustion byproduct gases/$LaNi_xM_yO_{3-z}$) is 5 or more and less than 12.6.

16. A method for preparing the electrode according to any one of claims 1 to 11, comprising a process of baking a mixture of $La(NO_3)_3$, $Ni(NO_3)_2$, and glycine, wherein a glycine/$NO_3^-$ molar ratio in the mixture is 0.1 or more and 0.3 or less.

# FIG. 1

# FIG. 2

# FIG. 3

# FIG. 4

## FIG. 5

Equivalent circuit

# FIG. 6

210105-004 5.0kV 8.0mm x500 YAGBSE      100um

## FIG. 7

## FIG. 8

## INTERNATIONAL SEARCH REPORT

| International application No. |
| --- |
| **PCT/JP2022/014663** |

| A. | CLASSIFICATION OF SUBJECT MATTER |
| --- | --- |

*C01B 3/02*(2006.01)i; *B01J 37/08*(2006.01)i; *C04B 35/50*(2006.01)i; *B01J 23/83*(2006.01)i; *B01J 23/843*(2006.01)i; *B01J 23/847*(2006.01)i; *B01J 23/889*(2006.01)i; *C25B 11/052*(2021.01)i; *C25B 11/077*(2021.01)i; *C25B 9/00*(2021.01)i; *C25B 1/04*(2021.01)i

FI: C25B11/077; C25B1/04; C01B3/02 H; B01J23/847 M; B01J23/889 M; B01J23/83 M; B01J23/843 M; C25B9/00 A; C25B11/052; B01J37/08; C04B35/50

According to International Patent Classification (IPC) or to both national classification and IPC

| B. | FIELDS SEARCHED |
| --- | --- |

Minimum documentation searched (classification system followed by classification symbols)

C01B3/02; B01J37/08; C04B35/50; B01J23/83; B01J23/843; B01J23/847; B01J23/889; C25B11/052; C25B11/077; C25B9/00; C25B1/04

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2018/155503 A1 (ASAHI KASEI KABUSHIKI KAISHA) 30 August 2018 (2018-08-30) claims, paragraphs [0019]-[0030], examples 9-11, 13, 15-17, 21, 27, 29, 31 | 1-16 |
| A | JP 2019-143235 A (ASAHI KASEI KABUSHIKI KAISHA) 29 August 2019 (2019-08-29) | 1-16 |
| A | WO 2013/012965 A1 (MASSACHUSETTS INSTITUTE OF TECHNOLOGY) 24 January 2013 (2013-01-24) | 1-16 |
| A | US 4497698 A (TEXAS A&M UNIVERSITY) 05 February 1985 (1985-02-05) | 1-16 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **26 May 2022** | **07 June 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT
### Information on patent family members

International application No.

**PCT/JP2022/014663**

| Patent document cited in search report | | | Publication date (day/month/year) | Patent family member(s) | | | Publication date (day/month/year) |
|---|---|---|---|---|---|---|---|
| WO | 2018/155503 | A1 | 30 August 2018 | EP 3587622 A1 claims, paragraphs [0039]-[0072], examples 9-11, 13, 15-17, 21, 27, 29, 31 CN 110199055 A | | | |
| JP | 2019-143235 | A | 29 August 2019 | (Family: none) | | | |
| WO | 2013/012965 | A1 | 24 January 2013 | US 2013/0020207 A1 | | | |
| US | 4497698 | A | 05 February 1985 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018155503 A

**Non-patent literature cited in the description**

- *Science,* 2011, vol. 334, 1383